# EUROPEAN PATENT APPLICATION

(11) **EP 4 757 358 A1**
(43) Date of publication of application: **10.06.2026**
(21) Application number: 24848148.3
(22) Date of filing: 26.07.2024
(51) Int. Cl.: H04W 4/50

(54) **AI SERVICE CONNECTION ESTABLISHMENT METHOD AND APPARATUS, AND TERMINAL AND NETWORK-SIDE DEVICE**

(30) Priority: 02.08.2023 CN 202310969430
(71) Applicant: Vivo Mobile Communication Co., Ltd., Dongguan, Guangdong 523863 (CN)
(72) Inventor: WANG, Hui, Dongguan, Guangdong 523863 (CN); KANG, Yanchao, Dongguan, Guangdong 523863 (CN)
(74) Representative: Conti, Marco
(86) International application number: PCT/CN2024/107677
(87) International publication number: WO 2025/026191

(57) **Abstract**

This application discloses an AI service connection establishment method and apparatus, a terminal, and a network-side device, pertaining to the field of communication technologies. The AI service connection establishment method of embodiments of this application includes: sending, by a terminal, a first request message to a network side, where the first request message is used to request the network side to allocate a network resource for an AI service; and receiving, by the terminal, a first request response message returned by the network side, where the first request response message includes at least one of the following: information of a first network element allocated by the network side for the AI service, information of a second network element allocated by the network side for the AI service, and model information.

## Description

### CROSS-REFERENCE TO RELATED APPLICATIONS

This application claims priority to Chinese Patent Application No. 202310969430.3, filed in China on August 2, 2023, which is incorporated herein by reference in its entirety.

### TECHNICAL FIELD

This application pertains to the field of communication technologies, and specifically, relates to an AI service connection establishment method and apparatus, a terminal, and a network-side device.

### BACKGROUND

With the development of wireless mobile communication technologies, artificial intelligence (Artificial Intelligence, AI) will become one of the pillar technologies of wireless mobile communication, and wireless mobile communication systems need to provide end-to-end support for Al-related services and applications. However, wireless mobile communication systems in related technologies do not provide AI as a general service to terminals.

### SUMMARY

Embodiments of this application provide an AI service connection establishment method and apparatus, a terminal, and a network-side device, which can resolve the problem that a wireless mobile communication system cannot provide AI services for terminals.

According to a first aspect, an AI service connection establishment method is provided, where the method is executed by a terminal, and the method includes:
sending, by a terminal, a first request message to a network side, where the first request message is used to request the network side to allocate a network resource for an AI service; and
receiving, by the terminal, a first request response message returned by the network side, where the first request response message includes at least one of the following: information of a first network element allocated by the network side for the AI service, information of a second network element allocated by the network side for the AI service, and model information.

According to a second aspect, an AI service connection establishment method is provided, where the method is executed by a network side, and the method includes:
receiving, by a fourth network element, a communication resource request message, where the communication resource request message is used to request a network side to allocate a communication resource for an AI service; and
allocating, by the fourth network element, a communication resource based on the communication resource request message, and returning a communication resource establishment response message, where the communication resource establishment response message includes at least one of the following: information of a first network element allocated by the network side for the AI service, information of a second network element allocated by the network side for the AI service, and model information.

According to a third aspect, an AI service connection establishment method is provided, where the method is executed by a network side, and the method includes:
receiving, by a fifth network element, an AI resource establishment request message, where the AI resource establishment request message is used to request a network side to allocate an AI resource for an AI service; and
allocating, by the fifth network element, an AI resource based on the AI resource establishment request message, and returning an AI resource establishment response message, where the AI resource establishment response message includes at least one of the following: information of a first network element, and information of a second network element.

According to a fourth aspect, an AI service connection establishment method is provided, where the method is executed by a network side, and the method includes:
receiving, by a sixth network element, a first request message, where the first request message is used to request a network side to allocate a network resource for an AI service of a terminal;
selecting, by the sixth network element, a fifth network element and a fourth network element, sending an AI resource establishment request message to the fifth network element, and sending a communication resource request message to the fourth network element;
receiving, by the sixth network element, an AI resource establishment response message returned by the fifth network element, where the AI resource establishment response message includes information of a first network element allocated for the AI service; and receiving a communication resource establishment response message returned by the fourth network element, where the communication resource establishment response message includes information of a second network element allocated for the AI service; and
returning, by the sixth network element, a first request response message, where the first request response message includes the information of the first network element and the information of the second network element.

According to a fifth aspect, an AI service connection establishment apparatus is provided, applied to a terminal and including:
a first sending module, configured to send a first request message to a network side, where the first request message is used to request the network side to allocate a network resource for an AI service; and
a first receiving module, configured to receive a first request response message returned by the network side, where the first request response message includes at least one of the following: information of a first network element allocated by the network side for the AI service, information of a second network element allocated by the network side for the AI service, and model information.

According to a sixth aspect, an AI service connection establishment apparatus is provided, applied to a network side and including:
a second receiving module, configured to receive a communication resource request message, where the communication resource request message is used to request a network side to allocate a communication resource for an AI service;
a first processing module, configured to allocate a communication resource based on the communication resource request message; and
a second sending module, configured to return a communication resource establishment response message, where the communication resource establishment response message includes at least one of the following: information of a first network element allocated by the network side for the AI service, information of a second network element allocated by the network side for the AI service, and model information.

According to a seventh aspect, an AI service connection establishment apparatus is provided, applied to a network side and including:
a third receiving module, configured to receive an AI resource establishment request message, where the AI resource establishment request message is used to request a network side to allocate an AI resource for an AI service;
a second processing module, configured to allocate an AI resource based on the AI resource establishment request message; and
a third sending module, configured to return an AI resource establishment response message, where the AI resource establishment response message includes at least one of the following: information of a first network element, and information of a second network element.

According to an eighth aspect, an AI service connection establishment apparatus is provided, applied to a network side and including:
a fourth receiving module, configured to receive a first request message, where the first request message is used to request a network side to allocate a network resource for an AI service of a terminal;
a third processing module, configured to select a fifth network element and a fourth network element; and
a fourth sending module, configured to send an AI resource establishment request message to the fifth network element and a communication resource request message to the fourth network element; where
the fourth receiving module is further configured to receive an AI resource establishment response message returned by the fifth network element, where the AI resource establishment response message includes information of a first network element allocated for the AI service; and receive a communication resource establishment response message returned by the fourth network element, where the communication resource establishment response message includes information of a second network element allocated for the AI service; and
the fourth sending module is further configured to return a first request response message, where the first request response message includes the information of the first network element and the information of the second network element.

According to a ninth aspect, a terminal is provided, where the terminal includes a processor and a memory, where a program or instructions capable of running on the processor are stored in the memory. When the program or the instructions are executed by the processor, the steps of the method according to the first aspect are implemented.

According to a tenth aspect, a terminal is provided, including a processor and a communication interface, where the communication interface is configured to send a first request message to a network side, where the first request message is used to request the network side to allocate a network resource for an AI service; and receive a first request response message returned by the network side, where the first request response message includes at least one of the following: information of a first network element allocated by the network side for the AI service, information of a second network element allocated by the network side for the AI service, and model information.

According to an eleventh aspect, a network-side device is provided, where the network-side includes a processor and a memory, where a program or instructions capable of running on the processor are stored in the memory. When the program or the instructions are executed by the processor, the steps of the method according to the second aspect or the third aspect or the fourth aspect are implemented.

According to a twelfth aspect, a network-side device is provided, including a processor and a communication interface, where the communication interface is configured to receive a communication resource request message, where the communication resource request message is used to request a network side to allocate a communication resource for an AI service; and the processor is configured to allocate a communication resource based on the communication resource request message, and the communication interface is further configured to return a communication resource establishment response message, where the communication resource establishment response message includes at least one of the following: information of a first network element allocated by the network side for the AI service, information of a second network element allocated by the network side for the AI service, and model information.

According to a thirteenth aspect, a network-side device is provided, including a processor and a communication interface, where the communication interface is configured to receive an AI resource establishment request message, where the AI resource establishment request message is used to request a network side to allocate an AI resource for an AI service; and the processor is configured to allocate an AI resource based on the AI resource establishment request message, and the communication interface is further configured to return an AI resource establishment response message, where the AI resource establishment response message includes at least one of the following: information of a first network element, and information of a second network element.

According to a fourteenth aspect, a network-side device is provided, including a processor and a communication interface, where the communication interface is configured to receive a first request message, where the first request message is used to request a network side to allocate a network resource for an AI service of a terminal; and the processor is configured to select a fifth network element and a fourth network element, and the communication interface is further configured to send an AI resource establishment request message to the fifth network element, and send a communication resource request message to the fourth network element; receive an AI resource establishment response message returned by the fifth network element, where the AI resource establishment response message includes information of a first network element allocated for the AI service; and receive a communication resource establishment response message returned by the fourth network element, where the communication resource establishment response message includes information of a second network element allocated for the AI service; and return, for the sixth network element, a first request response message, where the first request response message includes the information of the first network element and the information of the second network element.

According to a fifteenth aspect, a readable storage medium is provided, where a program or instructions are stored in the readable storage medium, and in a case that the program or the instructions are executed by a processor, the steps of the method according to the first aspect are implemented, or the steps of the method according to the second aspect or the third aspect or the fourth aspect are implemented.

According to a sixteenth aspect, a wireless communication system is provided, including a terminal and a network-side device, the terminal is configured to execute the steps of the method according to the first aspect; and the network-side device is configured to execute the steps of the method according to the second aspect or the third aspect or the fourth aspect.

According to a seventeenth aspect, a chip is provided, where the chip includes a processor and a communication interface, the communication interface is coupled to the processor, and the processor is configured to run a program or instructions to implement the steps of the method according to the first aspect or the steps of the method according to the second aspect or the third aspect or the fourth aspect.

According to an eighteenth aspect, a computer program/program product is provided, where the computer program/program product is stored in a storage medium, and the program/program product is executed by at least one processor to implement the steps of the method according to the first aspect are implemented, or the steps of the method according to the second aspect or the third aspect or the fourth aspect.

In the embodiments of this application, the network side can allocate a communication resource and an AI resource for the AI service based on a request of the terminal, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

### BRIEF DESCRIPTION OF DRAWINGS

FIG. 1 is a block diagram of a wireless communication system to which embodiments of this application are applicable;
FIG. 2 is a schematic diagram of a control-plane communication transmission channel establishment process;
FIG. 3 is a schematic diagram of a user-plane communication transmission channel establishment process;
FIG. 4 to FIG. 7 are flowcharts of an AI service connection establishment method according to an embodiment of this application;
FIG. 8 is a schematic diagram of a protocol stack provided in embodiment 1 of this application;
FIG. 9 is a flowchart of an AI service connection establishment method provided in embodiment 1 of this application;
FIG. 10 is a schematic diagram of a protocol stack provided in embodiment 2 of this application;
FIG. 11 is a flowchart of an AI service connection establishment method provided in embodiment 2 of this application;
FIG. 12 is a schematic diagram of a protocol stack provided in embodiment 3 of this application;
FIG. 13 is a flowchart of an AI service connection establishment method provided in embodiment 3 of this application;
FIG. 14 is a flowchart of an AI service connection establishment method provided in embodiment 4 of this application;
FIG. 15 is a schematic diagram of a protocol stack provided in embodiment 5 of this application;
FIG. 16 is a flowchart of an AI service connection establishment method provided in embodiment 5 of this application;
FIG. 17 is a schematic diagram of a protocol stack provided in embodiment 6 of this application;
FIG. 18 is a flowchart of an AI service connection establishment method provided in embodiment 6 of this application;
FIG. 19 is a schematic diagram of a protocol stack provided in embodiment 7 of this application;
FIG. 20 to FIG. 23 are schematic structural diagrams of an AI service connection establishment apparatus according to an embodiment of this application;
FIG. 24 is a schematic structural diagram of a communications device according to an embodiment of this application;
FIG. 25 is a schematic structural diagram of a terminal according to an embodiment of this application; and
FIG. 26 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

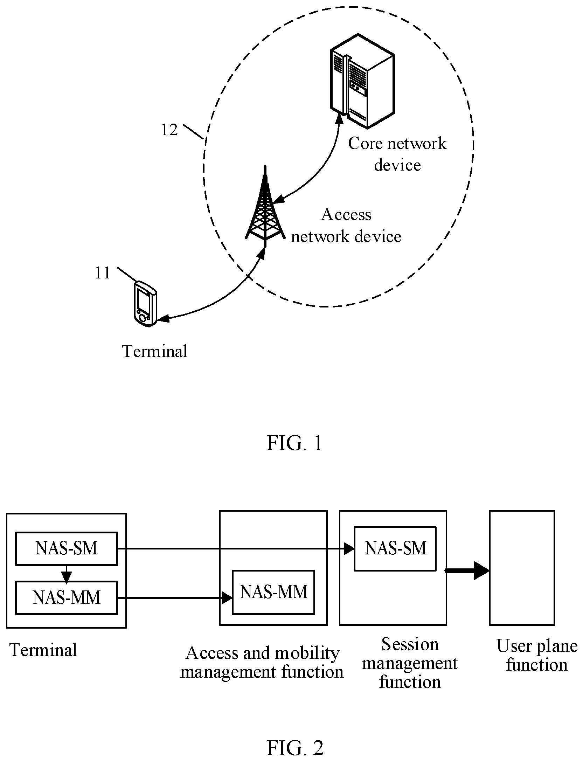

FIG. 1 is a block diagram of a wireless communication system to which the embodiments of this application are applicable. The wireless communication system includes a terminal 11 and a network side 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network side 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a NAS interface function, a communication management function, a communication resource node, a policy and charging function, an AI service management function, an external service management function, a service management function, a computing power service management function, an AI resource management function, a resource management function, a computing power resource management function, an AI model management function, a model management function, an AI resource node, a resource node, a computing power resource node, a service resource node, a data plane management function, a data source, an application server, and the like. It should be noted that in the embodiments of this application, only the core network device in the NR system is introduced as an example, and the specific type of the core network device is not limited.

In the process of UE data transmission, as shown in FIG. 2, a control-plane communication transmission channel is established, and the process of establishing the control-plane communication transmission channel includes the following steps:
Step 1: UE sends a protocol data unit (Protocol Data Unit, PDU) session establishment request; where a PDU session establishment request message is generated by a non-access-stratum session management (Non-access-stratum session management, NAS-SM) layer (layer) of the UE, and after being encapsulated in an N1 SM container (container) and transferred to a non-access-stratum mobility management (Non-access-stratum mobility management, NAS-MM) layer, is forwarded to an SMF via an AMF, where the AMF does not parse the PDU session establishment request.
Step 2: Perform user plane establishment.

The SMF selects a UPF and establishes user plane, and the SMF sends CN tunnel information (CN tunnel information) to a next-generation radio access network (Next Generation Radio Access Network, NG-RAN).

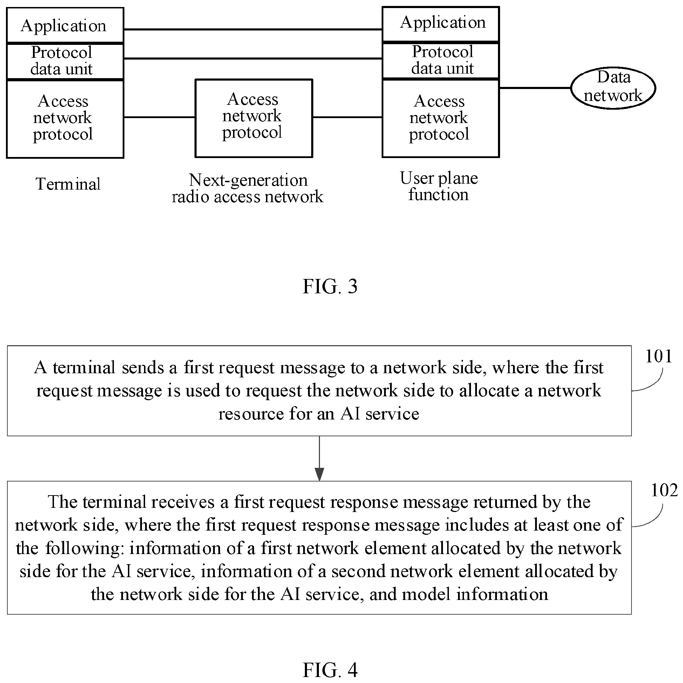

Then, a user-plane data transmission channel is established, and as shown in FIG. 3, the process of establishing the user-plane data transmission channel includes the following steps:
Step 1: An application layer (Application layer) delivers a data packet (data packet).
Step 2: The UE performs domain name system (Domain Name System, DNS) query to obtain a server (server) address, and the UE sets a destination address of the data packet as the server address and sets a source address as a UE IP address.
Step 3: The NG-RAN forwards the data packet to the UPF, and the UPF continues routing based on the destination address.

Wireless mobile communication systems in related technologies only utilize AI (for example, a network data analytics function (Network Data Analytics Function, NWDAF) network element) to perform some operation optimizations and do not provide AI as a general service to terminals. Moreover, operator networks can provide only data transmission pipelines with service quality guarantees (transmission delay, packet error rate, or the like) to some extent, and such pipelines are currently only used for data transmission between a UE and a target node and cannot perform corresponding AI service processing, such as using trained models for rendering tasks or feeding back reconstructed environmental data to terminals in autonomous driving scenarios.

The following specifically describes an AI service connection establishment method and apparatus, a terminal, and a network-side device provided in the embodiments of this application through specific embodiments and application scenarios thereof with reference to the accompanying drawings.

It should be noted that in this embodiment, an AI session refers to a special session between a user terminal and an AI resource node. After an AI session is established, a data transmission channel between a UE and an AI resource node is established. Therefore, in related technologies, if the UE wants to use an AI service (for example, AI data transmission), an AI session needs to be first established. In other words, an AI session is AI resources established between the UE and the AI resource node in the wireless mobile communication network. The AI session may also be referred to as an AI service connection or an AI connection.

In this embodiment, a sixth network element may specifically be a non-access-stratum (Non-Access-Stratum, NAS) interface function or an AMF and has the following functions: being an endpoint of an access network (Access Network, AN) signaling interface (N2), being an endpoint of NAS (N1) signaling (an MM message), being responsible for encryption and integrity protection of NAS messages, and being responsible for functions such as registration, access, mobility management, authentication, and short messages.

A fourth network element may specifically be a communication management function or an SMF and has the following functions: an endpoint of SM messages of NAS messages; establishment, modification, and release of sessions; management of UE IP allocation; selection and control of a UPF; collection of charging data and support for charging interfaces; determining of a session and service continuity (Session and Service Continuity, SSC) mode for a session; and downlink data indication.

A second network element may specifically be a communication resource node or a UPF and has the following functions: an anchor point for mobility within/between radio access technologies (Radio Access Technology, RAT) (when applicable); a session point for interconnecting external PDUs with data networks; packet routing and forwarding; data packet inspection; and implementation of user-plane policy rules, such as gating, redirection, and traffic steering.

A seventh network element may specifically be a policy and charging function or a PCF and has the following functions: application and service data flow detection, and policy (UE policy, session policy, or the like) generation and provision.

A fifth network element may specifically be an AI service management function, an external service management function, a service management function, or a computing power service management function and has the following functions: being used for service management and service identifier resolution, specifically, converting an external AI service request into an internal AI resource management function and/or communication resource management process; and determining required AI resources considering AI service categories and quality of service (Quality of Service, QoS) requirements of AI services.

A ninth network element may specifically be an AI model management function or a model management function and has the following functions: being used for model management, specifically, determining a suitable model based on an external model request.

An eighth network element may specifically be an AI resource management function, a resource management function, or a computing power resource management function and has the following functions: being used for service resource management, specifically, performing allocation update and release of AI and/or computing power resources on demand; and status update maintenance of AI and/or computing power resource nodes.

A first network element may specifically be an AI resource node, a resource node, a computing power resource node, or a service resource node and has the following functions: being used for service processing and service policy rule implementation, specifically, performing computing processing of AI services according to commands from an AI resource management function (user-plane execution process); and updating AI resource status to the AI resource management function.

A tenth network element may specifically be a data plane management function and has the following functions: being used to perform data management, including determining a data source according to a data request.

A third network element may specifically be a data source and has the following functions: being used to generate, store, and forward data.

An eleventh network element may specifically be an application server (Application Server, AS), used to perform external service processing, specifically processing data forwarded by a resource node and feeding back.

Referring to FIG. 4, FIG. 4 is a flowchart of an AI service connection establishment method according to an embodiment of this application. The method is executed by a terminal. As shown in FIG. 4, the method includes the following steps.

Step 101: The terminal sends a first request message to a network side, where the first request message is used to request the network side to allocate a network resource for an AI service.

Step 102: The terminal receives a first request response message returned by the network side, where the first request response message includes at least one of the following: information of a first network element allocated by the network side for the AI service, information of a second network element allocated by the network side for the AI service, and model information.

In this embodiment of this application, the terminal requests the network side to allocate a network resource for the AI service, and the network side can allocate a communication resource and an AI resource for the AI service according to the request from the terminal, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

It should be noted that the network resources are a set of total resources including communication resources, AI resources, and/or policy resources, and is a general term for various resources that provide a reliable guarantee link for a specific service. The communication resources are a set of communication service resources provided by 3GPP in related technologies to terminals or third parties, including but not limited to resources such as communication links, allocated and scheduled frequency bands, memory of base stations or network elements, and signaling forwarding. The AI resources are a set of resources to guarantee AI services, including but not limited to computing capabilities of high-performance computing machines (central processing unit (Central Processing Unit, CPU)/graphics processing unit (Graphics Processing Unit, GPU), or the like), storage capabilities for large amounts of training data, or the like. Being mapped to actual links can be understood as PDU sessions and AI sessions, the former belonging to sessions on a communication resource link, and the latter belonging to sessions on an AI resource link.

In some embodiments, the first request message includes at least one of the following:
AI service requirement description information;
a data network name (Data Network Name, DNN);
single network slice selection assistance information (Single Network Slice Selection Assistance Information, S-NSSAI);
a session type indication, used to indicate whether a session is a protocol data unit PDU session or an AI session;
PDU session information;
a policy reference identifier, including an AI service policy indication negotiated between a UE and a policy and charging function; and
an address of an application server AS.

Based on information included in the first request message, a central control node on the network side can convert service requirements of the AI service into internal policies executable by the network side, including a communication policy, an AI policy, or the like, where the communication policy includes QoS rules corresponding to a PDU session in related technologies, and the AI policy includes at least one of AI service processing delay, AI service processing accuracy, or the like. For example, when the central control node is an AI service management function, it determines on demand, according to the AI policy, whether to interact with other AI network elements to obtain related configuration information (for example, if no model is provided, the AI service management function needs to interact with an AI model management function to obtain a model; or if the first request message includes an indication that a data source is a data plane, the AI service management function needs to interact with the data plane to obtain a data source). The configuration information may include at least one of the following: a model, model download information (for example, a model download address), data source information (a data source address), and an AI service computation load (a computing power size and a type).

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience (Quality of Experience, QoE) requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

In some embodiments, a type of the first request message may include at least one of the following:
a communication resource request message, used to request the network side to allocate a communication resource for an AI service;
an AI resource request message, used to request the network side to allocate an AI resource for an AI service; and
a non-access stratum NAS message, used to request the network side to allocate a network resource for an AI service.

The terminal can request the network side to allocate resources for the AI service through the foregoing message types.

In some embodiments, the communication resource request message may include at least one of the following:
a protocol data unit PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

The AI resource request message includes at least one of the following:
an AI resource establishment request message, used to establish an AI session, where the AI session is a data transmission tunnel between the first network element and the terminal; and
an AI session establishment request message.

The NAS message includes at least one of the following:
a registration message;
a service request message;
an uplink NAS transport message; and
a first control message, used to establish or modify a control signaling connection.

In this embodiment, the terminal may request the network side to allocate resources for the AI service through any one of the foregoing messages or any plurality of messages.

In some embodiments, after the receiving, by the terminal, a first request response message returned by the network side, the method further includes:
sending, by the terminal, AI service data to the first network element, where the AI service data is transported via an AI session and routed to the first network element via the second network element; and
receiving, by the terminal, an AI service data processing result returned by the first network element.

In some embodiments, the AI service data processing result is obtained by the first network element based on at least one of a model, terminal data, and internal network data, and the internal network data is obtained by the first network element from a third network element.

In this embodiment, the network side may be responsible for overall processing of the AI service, and a user plane path of AI service data is: UE → communication resource node → AI resource node. After the UE obtains information of the AI resource node and information of the communication resource node, the processing of the AI service data includes the following two manners:
(1) The UE sets a destination address of the AI service data to the AI resource node.
   The UE encapsulates AI service data in a data packet, the data packet is routed to the communication resource node, and the communication resource node detects that the destination address is not the communication resource node itself, encapsulates the data packet, and routes it to the AI resource node.
(2) The UE sets a destination address of the AI service data to the communication resource node.

The UE obtains communication resource node information, and the communication resource node obtains AI resource node information through a communication management function. The UE encapsulates an address of the communication resource node in a data packet, the data packet is routed to the communication resource node, and the communication resource node forwards it to a corresponding AI resource node based on the information of the AI resource node.

Alternatively, the network side may be responsible for part of processing of an AI service, and in this case, an external AS is required to participate in processing of the rest of the AI service. The user plane path of the AI service data is: UE → communication resource node → AI resource node → AS. After the UE obtains information of the AI resource node and information of the communication resource node, the processing of the AI service data includes the following three manners:
(1) The UE sets a destination address of the AI service data to the AS address. The UE can use a DNS query to obtain an AS address; and the communication resource node obtains information of the AI resource node through a communication management function.
   The UE encapsulates the AS address in a data packet, and the data packet is routed to the communication resource node; then the communication resource node encapsulates the data packet and routes it to the AI resource node based on the destination address and the address of the AI resource node. The AI resource node encapsulates the data packet based on the destination address and routes it to the AS.
(2) The UE sets a destination address of the AI service data to the AI resource node. The UE can use a DNS query to obtain an AS address; and the AI resource node obtains the AS address through the AI resource management function.
   The UE encapsulates the address of the AI resource node in a data packet, the data packet is routed to the communication resource node, and the communication resource node encapsulates the data packet and routes it to the AI resource node based on the destination address. The AI resource node encapsulates the data packet and routes it to the AS based on the AS address.
(3) The UE sets a destination address of the AI service data to the communication resource node. The UE can use a DNS query to obtain an AS address; the AI resource node obtains the AS address through the AI resource management function; and the communication resource node obtains information of the AI resource node through the communication management function.

The UE encapsulates the address of the communication resource node in a data packet, the data packet is routed to the communication resource node, and the communication resource node encapsulates the data packet and routes it to the AI resource node based on the address of the AI resource node. The AI resource node encapsulates the data packet and routes it to the AS based on the AS address.

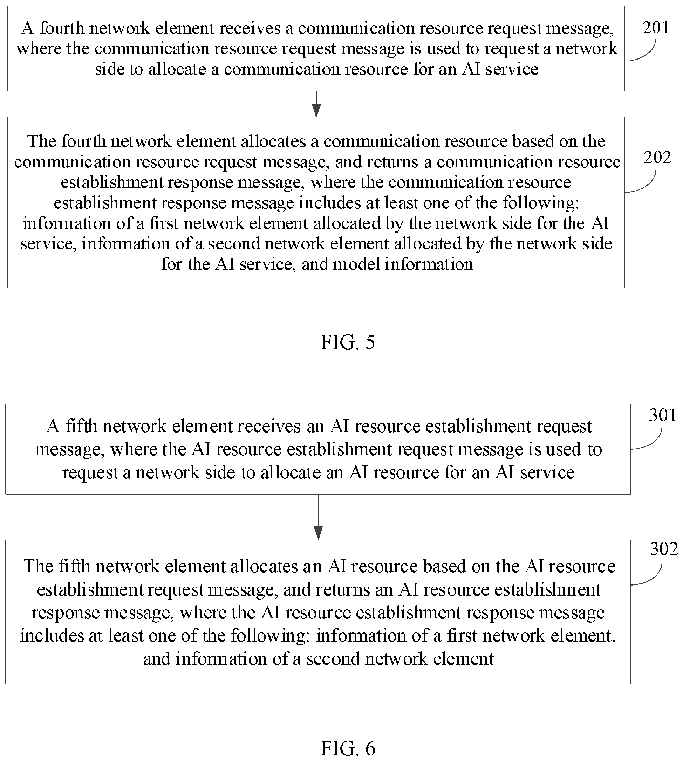

Referring to FIG. 5, FIG. 5 is a flowchart of an AI service connection establishment method according to an embodiment of this application. The method is executed by a network side. As shown in FIG. 5, the method includes the following steps.

Step 201: A fourth network element receives a communication resource request message, where the communication resource request message is used to request a network side to allocate a communication resource for an AI service.

Step 202: The fourth network element allocates a communication resource based on the communication resource request message, and returns a communication resource establishment response message, where the communication resource establishment response message includes at least one of the following: information of a first network element allocated by the network side for the AI service, information of a second network element allocated by the network side for the AI service, and model information.

In this embodiment of this application, the network side can allocate a communication resource and an AI resource for the AI service, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

In some embodiments, the fourth network element needs to meet at least one of the following requirements:
the fourth network element supports forwarding an AI resource request message;
the fourth network element supports establishing a bearer for an AI service;
the fourth network element supports communication with an AI network function; and
the fourth network element supports selecting an AI network function.

In some embodiments, the communication resource request message includes at least one of the following:
a terminal identifier;
a protocol data unit PDU session identifier;
an associated AI session identifier;
a data network name DNN;
single network slice selection assistance information S-NSSAI;
a session type indication, used to indicate whether a session is a PDU session or an AI session;
PDU session information, used to indicate an attribute of a PDU session;
AI service requirement description information;
an address of a fifth network element; and
an address of an application server AS.

Based on information included in the communication resource request message, a central control node on the network side can convert service requirements of the AI service into internal policies executable by the network side, including a communication policy, where the communication policy includes QoS rules corresponding to a PDU session in related technologies.

In some embodiments, a type of the communication resource request message includes at least one of the following:
a PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

In this embodiment, resources can be requested for the AI service through any one of the foregoing message types.

In some embodiments, before the allocating, by the fourth network element, a communication resource based on the communication resource request message, the method further includes:
selecting, by the fourth network element, a fifth network element and sending an AI resource establishment request message to the fifth network element, where the AI resource establishment request message is used to request the network side to allocate an AI resource for an AI service, and the AI resource establishment request message is generated by a terminal or the fourth network element; and
receiving, by the fourth network element, an AI resource establishment response message returned by the fifth network element, where the AI resource establishment response message includes the information of the first network element allocated for the AI service.

In this embodiment, the fourth network element may first obtain the information of the first network element, namely, an AI resource node, and select the second network element (a communication resource node) based on the communication policy and the information of the AI resource node.

In some embodiments, in a case that the type of the communication resource request message is the PDU session establishment request message or a communication channel establishment request, there is a many-to-one mapping relationship between an AI session identifier and a PDU session identifier; and
in a case that the type of the communication resource request message is the PDU session modification request message or a communication channel modification request, there is a one-to-one mapping relationship between an AI session identifier and a PDU session identifier.

In this way, the PDU session identifier can be determined based on the mapping relationship and the AI session identifier, or the AI session identifier can be determined based on the mapping relationship and the PDU session identifier.

In some embodiments, the AI resource establishment request message may include at least one of the following: an AI policy, information of the second network element, an address of the fourth network element, and an information feedback indication of the first network element.

In some embodiments, the fourth network element may select the fifth network element based on at least one of the following:
an area of interest;
terminal AI service subscription information;
a DNN;
S-NSSAI;
an AI service identifier;
a supported AI service; and
a capability of the fifth network element.

It can be understood that the area of interest is an area of interest of the terminal; the DNN is a DNN supported by the fifth network element, the S-NSSAI is S-NSSAI supported by the fifth network element, and the "supported AI service" is an AI service supported by the fifth network element.

In some embodiments, receiving the communication resource request message by the fourth network element includes at least one of the following:
obtaining from a terminal;
obtaining from a sixth network element; and
obtaining from a fifth network element.

In some embodiments, the method further includes:
obtaining, by the fourth network element, a communication policy, an AI policy, an address of an application server AS, and/or the information of the first network element, for determining the second network element, where the obtaining methods include at least one of the following:
determining based on the communication resource request message;
obtaining from a fifth network element;
obtaining from a sixth network element; and
obtaining from a seventh network element.

In this embodiment, the fourth network element may determine the second network element based on the communication policy and the information of the first network element; or determine the second network element based on the communication policy, the AI policy, and the information of the first network element; or determine the second network element based on the communication policy, the address of the AS, and the information of the first network element; or determine the second network element based on the communication policy, the AI policy, the address of the AS, and the information of the first network element.

In some embodiments, in a case that the communication policy and the AI policy are obtained from the seventh network element, the obtaining, by the fourth network element, a communication policy and an AI policy includes:
in a case that a dynamic policy control and charging (Policy Control and Charging, PCC) architecture is deployed, sending, by the fourth network element, a policy request message to the seventh network element, requesting the seventh network element to allocate a policy, and receiving the communication policy and the AI policy returned by the seventh network element, where the policy request message includes at least one of the following: a terminal identifier, a PDU session identifier, an associated AI session identifier, a DNN, S-NSSAI, and AI service requirement description information; and
in a case that the dynamic PCC architecture is not deployed, determining, by the fourth network element, the communication policy and the AI policy based on at least one of the following: local configuration, an AI service identifier, and a policy reference identifier.

In this embodiment, in a case that the dynamic policy control and charging PCC architecture is deployed, the seventh network element may allocate the AI policy and the communication policy; and in a case that the dynamic PCC architecture is not deployed, the communication policy and the AI policy can be determined by the fourth network element itself.

Referring to FIG. 6, FIG. 6 is a flowchart of an AI service connection establishment method according to an embodiment of this application. The method is executed by a network side. As shown in FIG. 6, the method includes the following steps.

Step 301: A fifth network element receives an AI resource establishment request message, where the AI resource establishment request message is used to request a network side to allocate an AI resource for an AI service.

Step 302: The fifth network element allocates an AI resource based on the AI resource establishment request message, and returns an AI resource establishment response message, where the AI resource establishment response message includes at least one of the following: information of a first network element, and information of a second network element.

In this embodiment of this application, the network side can allocate a communication resource and an AI resource for the AI service, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

In some embodiments, the AI resource establishment request message includes at least one of the following:
AI service requirement description information;
a data network name DNN;
single network slice selection assistance information S-NSSAI;
a session type indication, used to indicate whether a session is a PDU session or an AI session;
PDU session information;
a policy reference identifier; and
an address of an application server AS.

In some embodiments, before the allocating, by the fifth network element, an AI resource based on the AI resource establishment request message, the method further includes:
determining, by the fifth network element, an AI policy and/or a communication policy based on the AI service requirement description information. Based on the AI service requirement description information, the fifth network element can convert a service requirement of the AI service into an internal policy executable by the network side, where the internal policy includes a communication policy, an AI policy, or the like, where the communication policy includes QoS rules corresponding to a PDU session in related technologies, and the AI policy includes at least one of AI service processing delay, AI service processing accuracy, or the like. For example, when the central control node is an AI service management function, it determines on demand, according to the AI policy, whether to interact with other AI network elements to obtain related configuration information (for example, if no model is provided, the AI service management function needs to interact with an AI model management function to obtain a model; or if the first request message includes information indicating that a data source is a data plane, the AI service management function needs to interact with the data plane to obtain a data source). The configuration information may include at least one of the following: a model, model download information (for example, a model download address), data source information (a data source address), and an AI service computation load (a computing power size and a type).

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience QoE requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

In some embodiments, the method further includes:
obtaining, by the fifth network element, an AI policy and/or a communication policy, where the obtaining methods include at least one of the following:
obtaining based on local configuration;
obtaining from a seventh network element;
obtaining from a fourth network element; and
obtaining from a sixth network element.

In some embodiments, in a case of obtaining from the fourth network element, the method further includes:
sending, by the fifth network element, a communication resource request message to the fourth network element, for requesting the fourth network element to select a second network element, where the communication resource request message includes at least one of the following: a communication policy, information of the first network element, an address of the fifth network element, and an information feedback indication of the first network element.

In some embodiments, the allocating, by the fifth network element, an AI resource based on the AI resource establishment request message includes:
sending, by the fifth network element, an AI resource request message to an eighth network element, used for the eighth network element to select the first network element based on the AI resource request message, where the AI resource request message includes at least one of the following: model information, data source information, an AI service computation load, an address of an application server AS, and an AI policy; and
receiving, by the fifth network element, an AI resource request response message returned by the eighth network element, where the AI resource request response message includes information of the first network element, and the information of the first network element includes at least one of the following:
   an Internet protocol (Internet Protocol, IP) address;
   identification information; and
   a fully qualified domain name (Fully Qualified Domain Name, FQDN).

In some embodiments, before the allocating, by the fifth network element, an AI resource based on the AI resource establishment request message, the method further includes:
in a case that a first condition is satisfied, sending, by the fifth network element, a model request message to a ninth network element, where the model request message is used to request model information; and
receiving, by the fifth network element, a model request response message sent by the ninth network element, where the model request response message is used to indicate model information; where
the model information includes at least one of the following: a model identifier, a model download address, a model size, a model training algorithm, model precision, accuracy, a model manufacturer, a model function identifier, a model architecture, and a weight parameter; and
the first condition includes at least one of the following:
   the AI resource establishment request message does not include model information;
   the AI resource establishment request message includes a first indication indicating that interaction with the ninth network element is required; and
   the fifth network element is unable to obtain model information.

In this embodiment, the AI service management function may send a model request message to the AI model management function to determine the model information.

In some embodiments, the fifth network element may select the ninth network element based on at least one of the following:
a DNN;
S-NSSAI;
an AI service identifier;
a supported AI service;
service area information; and
supported model information.

It can be understood that DNN is a DNN supported by the ninth network element, S-NSSAI is S-NSSAI supported by the ninth network element, "supported AI service" is an AI service supported by the ninth network element, "service area information" is service area information of the ninth network element, and "supported model information" is model information supported by the ninth network element.

In some embodiments, before the allocating, by the fifth network element, an AI resource based on the AI resource establishment request message, the method further includes:
in a case that a second condition is satisfied, sending, by the fifth network element, a data source request message to a tenth network element, where the data source request message is used to request data source information; and
receiving, by the fifth network element, a data source response message sent by the tenth network element, where the data source response message is used to indicate data source information; where
the data source information includes at least one of the following: a data source IP address, a data source FQDN, and a data source identifier; and
the second condition includes at least one of the following:
   the AI resource establishment request message does not include data source information;
   the AI resource establishment request message includes a second indication, indicating that interaction with the tenth network element is required; and
   the fifth network element is unable to obtain data source information.

In this embodiment, an AI service management function may send a data source request message to a data plane management function, for determining data source information.

In some embodiments, the fifth network element may select the tenth network element based on at least one of the following:
a DNN;
S-NSSAI;
an AI service identifier;
a supported AI service;
service area information; and
data source information.

It can be understood that DNN is a DNN supported by the tenth network element, S-NSSAI is S-NSSAI supported by the tenth network element, "supported AI service" is an AI services supported by the tenth network element, "service area information" is service area information of the tenth network element, and "supported model information" is model information supported by the tenth network element.

In some embodiments, the communication resource request message may include at least one of the following:
a protocol data unit PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

In this embodiment, the network side can be requested through any one of the foregoing messages or any plurality of messages to allocate a resource for the AI service.

In some embodiments, in a case that the type of the communication resource request message is a PDU session establishment request message or a communication channel establishment request, there is a many-to-one mapping relationship between an AI session identifier and a PDU session identifier; and
in a case that the type of the communication resource request message is a PDU session modification request message or a communication channel modification request, there is a one-to-one mapping relationship between an AI session identifier and a PDU session identifier.

In this way, the PDU session identifier can be determined based on the mapping relationship and the AI session identifier, or the AI session identifier can be determined based on the mapping relationship and the PDU session identifier.

In some embodiments, the AI resource establishment request message received by the fifth network element includes at least one of the following:
obtaining from a fourth network element, where the AI resource establishment request message is generated by a terminal or the fourth network element; and
obtaining from a sixth network element, where the AI resource establishment request message is generated by the terminal.

In some embodiments, in the case of obtaining from the sixth network element, the method further includes:
sending, by the fifth network element, an AI resource establishment request response to the sixth network element, used to feed back an AI resource establishment result, where the AI resource establishment request response includes at least one of the following: information of the first network element, and an AI policy.

In some embodiments, the information of the first network element includes at least one of the following: an IP address of the first network element, identification information of the first network element, and an FQDN of the first network element; and
the information of the second network element includes at least one of the following: an IP address of the second network element, identification information of the second network element, and an FQDN of the second network element.

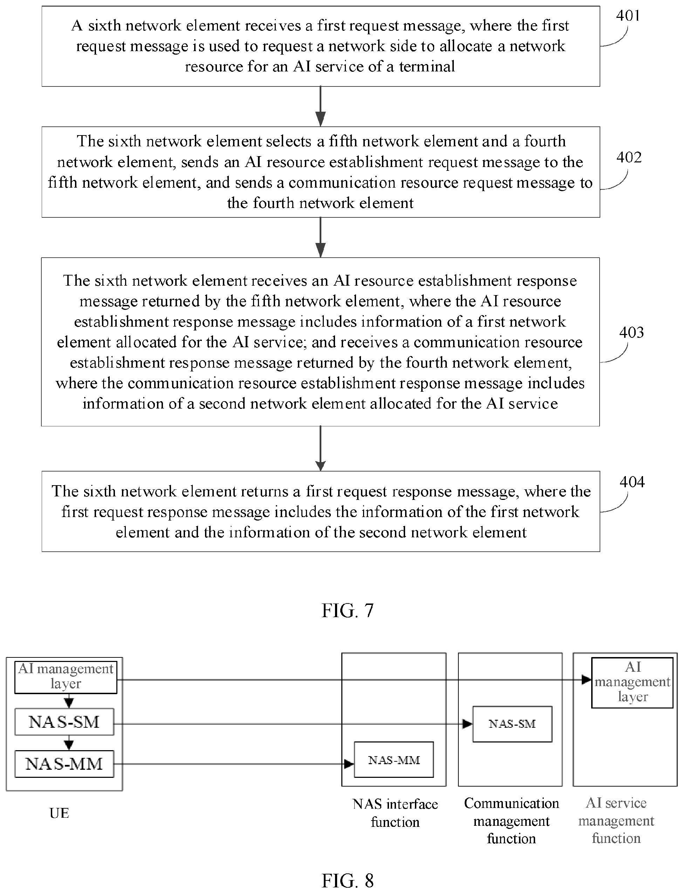

Referring to FIG. 7, FIG. 7 is a flowchart of an AI service connection establishment method according to an embodiment of this application. The method is executed by a network side. As shown in FIG. 7, the method includes the following steps.

Step 401: A sixth network element receives a first request message, where the first request message is used to request a network side to allocate a network resource for an AI service of a terminal.

Step 402: The sixth network element selects a fifth network element and a fourth network element, sends an AI resource establishment request message to the fifth network element, and sends a communication resource request message to the fourth network element.

Step 403: The sixth network element receives an AI resource establishment response message returned by the fifth network element, where the AI resource establishment response message includes information of a first network element allocated for the AI service; and receives a communication resource establishment response message returned by the fourth network element, where the communication resource establishment response message includes information of a second network element allocated for the AI service.

Step 404: The sixth network element returns a first request response message, where the first request response message includes the information of the first network element and the information of the second network element.

In this embodiment of this application, the network side can allocate a communication resource and an AI resource for the AI service, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

It should be noted that the network resources are a set of total resources including communication resources, AI resources, and/or policy resources, and is a general term for various resources that provide a reliable guarantee link for a specific service. The communication resources are a set of communication service resources provided by the 3rd generation partnership project (3rd Generation Partnership Project, 3GPP) in related technologies to terminals or third parties, including but not limited to resources such as communication links, allocated and scheduled frequency bands, memory of base stations or network elements, and signaling forwarding. The AI resources are a set of resources to guarantee AI services, including but not limited to computing capabilities of high-performance computing machines (CPU/GPU or the like), storage capabilities for large amounts of training data, or the like. Being mapped to actual links can be understood as PDU sessions and AI sessions, the former belonging to sessions on a communication resource link, and the latter belonging to sessions on an AI resource link.

In some embodiments, the method further includes:
determining, by the sixth network element based on at least one of the following, to first send the communication resource request message or the AI resource establishment request message:
local configuration; and
a resource determination indication, used to indicate to first determine an AI resource or a communication resource.

In some embodiments, the first request message includes at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier; and
an address of an application server AS.

Based on information included in the first request message, the network side can convert service requirements of the AI service into internal policies executable by the network side, including a communication policy and an AI policy, or the like, where the communication policy includes QoS rules corresponding to a PDU session in related technologies, and the AI policy includes at least one of AI service processing delay, AI service processing accuracy, and the like. For example, when the central control node is an AI service management function, it determines on demand, according to the AI policy, whether to interact with other AI network elements to obtain related configuration information (for example, if no model is provided, the AI service management function needs to interact with an AI model management function to obtain a model; or if the first request message includes an indication that a data source is a data plane, the AI service management function needs to interact with the data plane to obtain a data source). The configuration information may include at least one of the following: a model, model download information (for example, a model download address), data source information (a data source address), and an AI service computation load (a computing power size and a type).

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience QoE requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

In some embodiments, the communication resource request message includes at least one of the following:
a protocol data unit PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

The AI resource request message includes at least one of the following:
an AI resource establishment request message, used to establish an AI session, where the AI session is a data transmission tunnel between the first network element and the terminal; and
an AI session establishment request message.

In this embodiment, the network side can be requested through any one of the foregoing messages or any plurality of messages to allocate a resource for the AI service.

In some embodiments, the sixth network element selects the fifth network element based on at least one of the following:
an area of interest;
terminal AI service subscription information;
a DNN;
S-NSSAI;
an AI service identifier;
a supported AI service; and
a capability of the fifth network element.

In some embodiments, the fourth network element satisfies at least one of the following:
the fourth network element supports forwarding an AI resource request message;
the fourth network element supports establishing a bearer for an AI service;
the fourth network element supports communication with an AI network function; and
the fourth network element supports selecting an AI network function.

The technical solutions of this application are further described below with reference to the accompanying drawings and specific embodiments.

### Embodiment 1

In this embodiment, a communication management function acts as a central control node. In this embodiment, based on the protocol stack shown in FIG. 8, a new protocol layer such as an AI management layer is added to the UE, and is responsible for generating AI service messages, such as an AI resource establishment request message, for triggering allocation of an AI resource. A message encapsulation manner is: encapsulating an AI resource request message in a communication resource request message, and encapsulating the communication resource request message in a NAS message. A NAS-SM layer of the terminal generates a communication resource request message, and the AI management layer of the UE generates an AI resource request message.

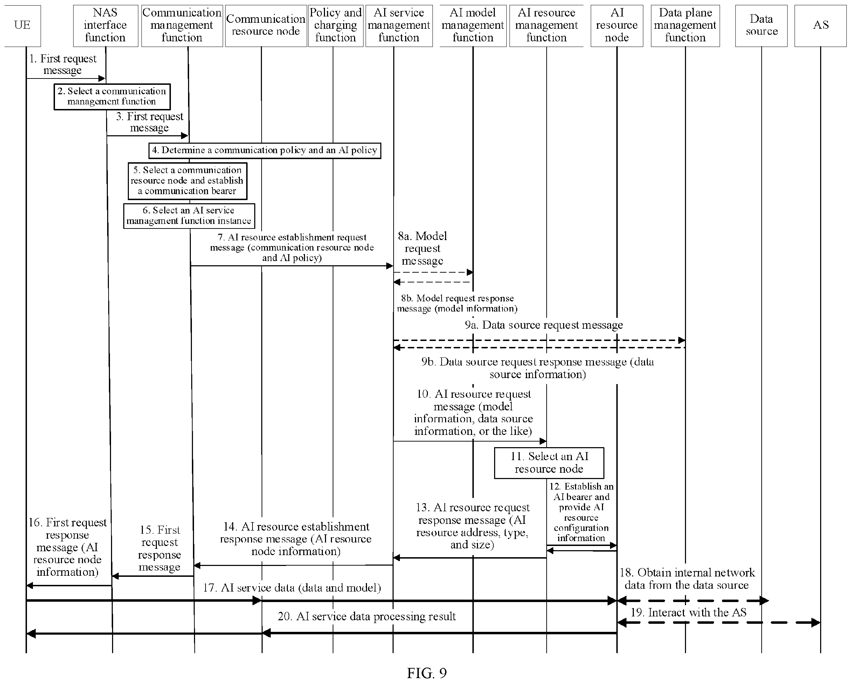

As shown in FIG. 9, this embodiment includes the following steps.

Step 1: The UE sends a first request message to a NAS interface function, where the first request message is used to request a network side to allocate a network resource for an AI service.

The first request message may be a communication resource request message, specifically, may be at least one of the following: a PDU session establishment request message, a PDU session modification request message, and a communication channel establishment request message (used for establishing a data transmission channel). The first request message is encapsulated in a NAS message. Specifically, an encapsulation manner may be at least one of the following: being encapsulated in an N1 SM container, and being encapsulated in a newly added container (used to encapsulate messages of session management, channel establishment, or the like).

The first request message includes at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier, including an AI service policy indication negotiated between a UE and a policy and charging function; and
an address of an application server AS.

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience QoE requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

In this embodiment, the NAS interface function is similar to an AMF, or the NAS interface function is an AMF.

Step 2: the NAS interface function selects a communication management function.

The NAS interface function can find a communication management function instance using an NRF or based on local configuration information, similar to the AMF selecting an SMF during PDU session establishment. The NAS interface function needs to consider additional factors during selection of the communication management function, and the considered factors include at least one of the following: the communication management function supports forwarding AI-related messages, the communication management function supports establishing a bearer for AI services, and the communication management function supports communication with an AI function (that is, having an interface with the AI function).

Step 3: The NAS interface function sends a first request message to the communication management function, for requesting allocation of corresponding network resources for the AI service.

The NAS interface function determines based on at least one of the following to send the first request message to the communication management function: a session type indication, a first request message, and a container type.

The first request message in this step may include at least one of the following: a UE ID, a PDU session ID, an associated AI session ID, a session type indication, a DNN, S-NSSAI, PDU session information, AI service requirement description information, an address of the AI service management function instance, and an AS address.

When the first request message is the PDU session establishment request message, there is a many-to-one binding relationship between an AI session ID and a PDU session ID; and when the first request message is the PDU session modification message, there is a one-to-one binding relationship between an AI session ID and a PDU session ID.

Step 4: The communication management function determines a communication policy and an AI policy based on the first request message.

Implementation 1: If a dynamic PCC architecture is deployed, the communication management function sends a policy request message to a policy and charging function, and the policy and charging function allocates a policy based on the policy request message. The request message includes at least one of the following: a UE ID, a PDU session ID, an associated AI session ID, a DNN, S-NSSAI, and one or more items in AI service requirement description information.

Implementation 2: If a dynamic PCC architecture is not deployed, the communication management function allocates a policy based on at least one of the following: local configuration, an AI service identifier, and a policy ID.

Step 5: The communication management function selects a communication resource node according to a communication policy, and establishes or modifies a corresponding communication bearer, where the communication bearer is used to transmit AI service data.

The communication resource node information includes at least one of the following: an IP address, ID information, and an FQDN.

Step 6: The communication management function selects the AI service management function instance.

Optionally, before selecting an AI service management function instance, the communication management function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

The communication management function finds a matching AI service management function instance by using an NRF or according to local configuration information based on at least one of the following:
an area of interest;
UE AI task-related subscription information;
a DNN;
S-NSSAI;
an AI service identifier;
a supported AI service; and
a capability of the AI service management function instance, including a capability of determining AI service processing delay, AI service processing accuracy, an AI service computation load, and so on.

Step 7: The communication management function sends an AI resource establishment request message to the AI service management function, which is used to request the network side to allocate a corresponding AI resource. The AI resource establishment request message includes but is not limited to at least one of the following: an AI policy, communication resource node information, an address of the communication management function instance, and an AI resource node information feedback indication.

The AI resource establishment request message is generated by a newly added protocol layer (for example, an AI management layer) in the UE, and is encapsulated in the first request message. An encapsulation manner may be at least one of the following: encapsulated in a newly added container (used to encapsulate AI-related messages, for example, messages of AI session management, AI channel establishment, or the like).

Step 8a: The AI service management function sends a model request message to the AI model management function for determining model information.

Step 8a is an optional step, and Step 8a needs to be performed under at least one of the following conditions:
the AI resource establishment request message does not include model information;
the AI resource establishment request message includes an indication that interaction with the AI model management function is required; and
the AI service management function cannot obtain model information.

The AI service management function selects the AI model management function instance based on at least one of the following:
a DNN;
S-NSSAI;
an AI service identifier;
a supported AI service;
service area information; and
supported model information.

Step 8b: The AI model management function sends a model request response message to the AI service management function, used to indicate model information. In this way, the AI service management function can determine data source information based on the AI model information, and if already determined, step 9 is not performed.

Step 9a: The AI service management function sends a data source request message to the data plane management function, used to determine data source information.

Step 9a is an optional step, and Step 9a needs to be performed under at least one of the following conditions:
the AI resource establishment request message does not include data source information;
the AI resource establishment request message includes an indication that interaction with the data plane management function is required; and
the AI service management function cannot obtain data source information.

The AI service management function selects the data plane management function instance based on at least one of the following:
a DNN;
S-NSSAI;
an AI service identifier;
a supported AI service;
service area information; and
data source information.

Step 9b: The data plane management function sends a model request response to the AI service management function, used to indicate data source information.

In this embodiment, the AI service management function, the AI model management function, and the AI resource management function may be co-located, that is, the AI service management function, the AI model management function, and the AI resource management function may be integrated, and if the AI service management function, the AI model management function, and the AI resource management function are co-located, steps 8 and 9 are omitted.

Step 10: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 11: The AI resource management node selects an appropriate AI resource node based on the AI resource request message.

Step 12: The AI resource management function establishes an Al bearer and provides AI resource configuration information to an AI resource node, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 13: The AI resource management function sends an AI resource request response message to the AI service management function, including AI resource node information, where the AI resource node information includes at least one of the following:
an IP address;
ID information; and
an FQDN.

Step 14: The AI service management function sends an AI resource establishment response message to the communication management function, including AI resource node information.

Step 15: The communication management function sends a first request response message to the NAS interface function, used to inform the network side of a resource establishment result, including communication resource node information and AI resource node information.

Step 16: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

Step 17: An application APP triggers AI service data transmission, where AI service data is carried on a PDU session and routed to the AI resource node via the communication resource node.

The AI service data includes at least one of the following: UE data, and model information;

In this step, the communication management function does not know the AI resource node information, and the UE can only set the AI resource node information as a destination address.

Step 18: Optionally, the AI resource node obtains internal network data from a data source.

The AI resource node determines data source information, including but not limited to at least one of the following manners: obtaining from AI resource configuration information; and obtaining from local configuration.

Step 19: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

Step 20: The AI resource node processes the AI service data based on the network model, UE data, and network data, and feeds back a processing result to the UE.

### Embodiment 2

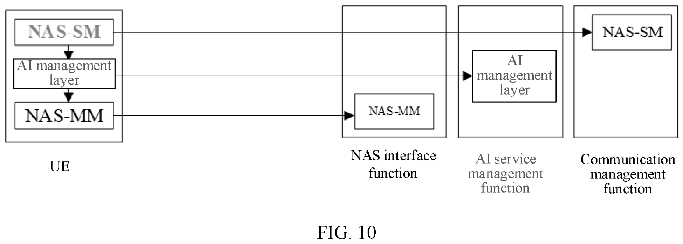

In this embodiment, an AI service management function acts as a central control node. In this embodiment, based on the protocol stack shown in FIG. 10, a new protocol layer such as an AI management layer is added to the UE, and is responsible for generating AI service messages, such as an AI resource establishment request message, for triggering allocation of an AI resource. The newly added protocol layer is below the NAS-SM layer in related technologies. A message encapsulation manner is: encapsulating a communication resource request message in an AI resource request message, and encapsulating the AI resource request message in a NAS message. The NAS-SM layer of the UE generates a communication resource request message, and the AI management layer of the UE generates an AI resource request message.

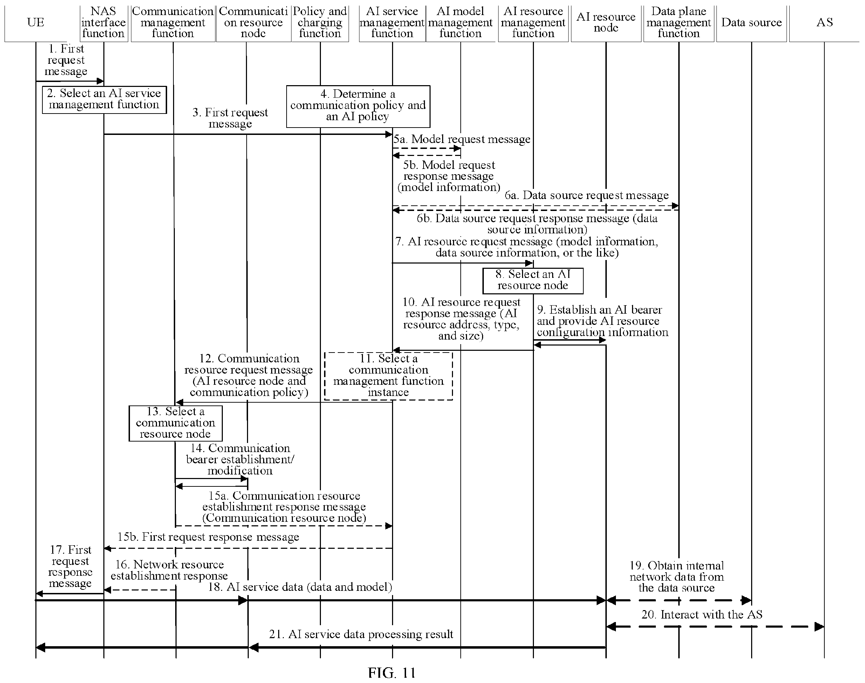

As shown in FIG. 11, this embodiment includes the following steps.

Step 1: The UE sends a first request message to a NAS interface function, where the first request message is used to request a network side to allocate a network resource for an AI service.

The first request message may be a communication resource request message, specifically, may be at least one of the following: a PDU session establishment request message, a PDU session modification request message, and a communication channel establishment request message (used for establishing a data transmission channel). The first request message is generated by the newly added protocol layer (for example, the AI management layer) of the UE, and the first request message is encapsulated in a NAS message. Specifically, an encapsulation manner may be at least one of the following: being encapsulated in a newly added container (used to encapsulate AI-related messages, for example, messages of AI session management, AI channel establishment, or the like).

The first request message includes at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier, including an AI service policy indication negotiated between a UE and a policy and charging function; and
an address of an application server AS.

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience QoE requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

Step 2: The NAS interface function selects the AI service management function instance.

Optionally, before selecting an AI service management function instance, the NAS interface function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

The NAS interface function finds a matching AI service management function instance by using an NRF or according to local configuration information based on at least one of the following:
an area of interest;
UE AI task-related subscription information;
a DNN;
S-NSSAI;
an AI service identifier;
a supported AI service; and
a capability of the AI service management function instance, including a capability of determining AI service processing delay, AI service processing accuracy, an AI service computation load, and so on.

Step 3: The NAS interface function sends a first request message to the AI service management function.

Step 4: The AI service management function determines a communication policy and an AI policy based on the first request message.

Implementation 1: If a dynamic PCC architecture is deployed, the AI service management function sends a policy request message to a policy and charging function, and the policy and charging function allocates a policy based on the policy request message. The request message includes at least one of the following: a UE ID, a PDU session ID, an associated AI session ID, a DNN, S-NSSAI, and one or more items in AI service requirement description information.

Implementation 2: If a dynamic PCC architecture is not deployed, the AI service management function allocates a policy based on at least one of the following: local configuration, an AI service identifier, and a policy ID.

Step 5a: The AI service management function sends a model request message to the AI model management function for determining model information.

Step 5a is an optional step, and Step 5a needs to be performed under at least one of the following conditions:
the AI resource establishment request message does not include model information;
the AI resource establishment request message includes an indication that interaction with the AI model management function is required; and
the AI service management function cannot obtain model information.

The AI service management function selects the AI model management function instance based on at least one of the following:
a DNN;
S-NSSAI;
an AI service identifier;
a supported AI service;
service area information; and
supported model information.

Step 5b: The AI model management function sends a model request response message to the AI service management function, used to indicate model information. In this way, the AI service management function can determine data source information based on the AI model information, and if already determined, step 6 is not performed.

Step 6a: The AI service management function sends a data source request message to the data plane management function, used to determine data source information.

Step 6a is an optional step, and Step 6a needs to be performed under at least one of the following conditions:
the AI resource establishment request message does not include data source information;
the AI resource establishment request message includes an indication that interaction with the data plane management function is required; and
the AI service management function cannot obtain data source information.

The AI service management function selects the data plane management function instance based on at least one of the following:
a DNN;
S-NSSAI;
an AI service identifier;
a supported AI service;
service area information; and
data source information.

Step 6b: The data plane management function sends a model request response to the AI service management function, used to indicate data source information.

In this embodiment, the AI service management function, the AI model management function, and the AI resource management function may be co-located, that is, the AI service management function, the AI model management function, and the AI resource management function may be integrated, and if the AI service management function, the AI model management function, and the AI resource management function are co-located, steps 5 and 6 are omitted.

Step 7: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 8: The AI resource management node selects an appropriate AI resource node based on the AI resource request message.

Step 9: The AI resource management function establishes an AI bearer and provides AI resource configuration information to an AI resource node, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 10: The AI resource management function sends an AI resource request response message to the AI service management function, including AI resource node information, where the AI resource node information includes at least one of the following:
an IP address;
ID information; and
an FQDN.

Step 11: The AI service management function selects the communication management function instance, and the AI service management function may find the communication management function instance using an NRF or according to local configuration information, and the AI service management function selects a communication management function based on at least one of the following: the communication management function supports forwarding AI-related messages, the communication management function supports establishing a bearer for an AI service, and the communication management function supports communication with an AI function (that is, having an interface with the AI function).

Step 11 is an optional step. If the AI service management function does not receive an address of the communication management function instance, this step needs to be performed.

Step 12: The AI service management function sends a communication resource request message to the communication management function, used to request the communication management function to select an appropriate communication resource node, including at least one of the following: a communication policy, AI resource node information, an address of the AI service management function instance, and an AI resource node information feedback indication.

The communication resource request message specifically may be at least one of the following: a PDU session establishment request message, a PDU session modification message, and a communication channel establishment request message (used for establishing a data transmission channel).

When the communication resource request message is the PDU session establishment request message, there is a many-to-one binding relationship between an AI session ID and a PDU session ID; and when the communication resource request message is the PDU session modification message, there is a one-to-one binding relationship between an AI session ID and a PDU session ID.

Step 13: The communication management function instance selects an appropriate communication resource node based on a communication policy and the AI resource node information.

Step 14: The communication management function establishes or modifies a corresponding communication bearer based on the communication policy, where the communication bearer is used to transmit AI service data.

The communication management function may also configure AI resource node information to the communication resource node, used for the communication resource node to process and forward AI service data packets.

Step 15a: The communication management function sends a communication resource establishment response message to the AI service management function, including communication resource node information.

Step 15a is an optional step, and if the communication management function receives an address of the AI service management function instance and/or an AI resource node information feedback indication, this step is performed. Otherwise, the communication management function performs step 16.

Step 15b: The AI service management function sends a first request response message to the NAS interface function, used to inform the network of a resource establishment result, and including AI resource node information and communication resource node information.

Step 16: The communication management function sends a network resource establishment response message to the NAS interface function, used to inform the network of a resource establishment result, and including AI resource node information and communication resource node information.

Step 16 is an optional step.

Step 17: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

The first request response message is encapsulated in a container in the NAS message, for example, encapsulated in an N1 AI management container.

Step 18: An application APP triggers AI service data transmission, where AI service data is carried on a PDU session and routed to the AI resource node via the communication resource node.

The AI service data includes at least one of the following: UE data, and model information;

In this step, the communication management function does not know the AI resource node information, and the UE can only set the AI resource node information as a destination address.

Step 19: Optionally, the AI resource node obtains internal network data from a data source.

The AI resource node determines data source information, including but not limited to at least one of the following manners: obtaining from AI resource configuration information; and obtaining from local configuration.

Step 20: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

Step 21: The AI resource node processes the AI service data based on the network model, UE data, and network data, and feeds back a processing result to the UE.

### Embodiment 3

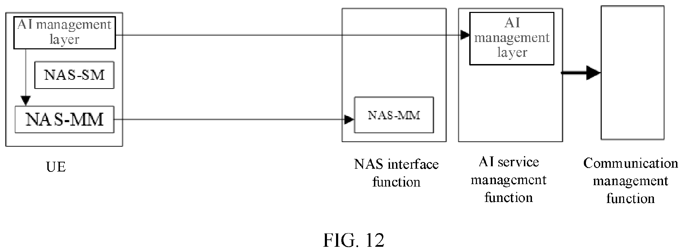

In this embodiment, an AI service management function acts as a central control node. In this embodiment, based on the protocol stack shown in FIG. 12, a new protocol layer such as an AI management layer is added to the UE, and is responsible for generating AI service messages, such as an AI resource establishment request message, for triggering allocation of an AI resource. The newly added protocol layer is below the NAS-SM layer in related technologies. A message encapsulation manner is: encapsulating a communication resource request message in an AI resource request message, and encapsulating the AI resource request message in a NAS message. The AI service management function generates a communication resource request message, and the AI management layer of the UE generates an AI resource request message.

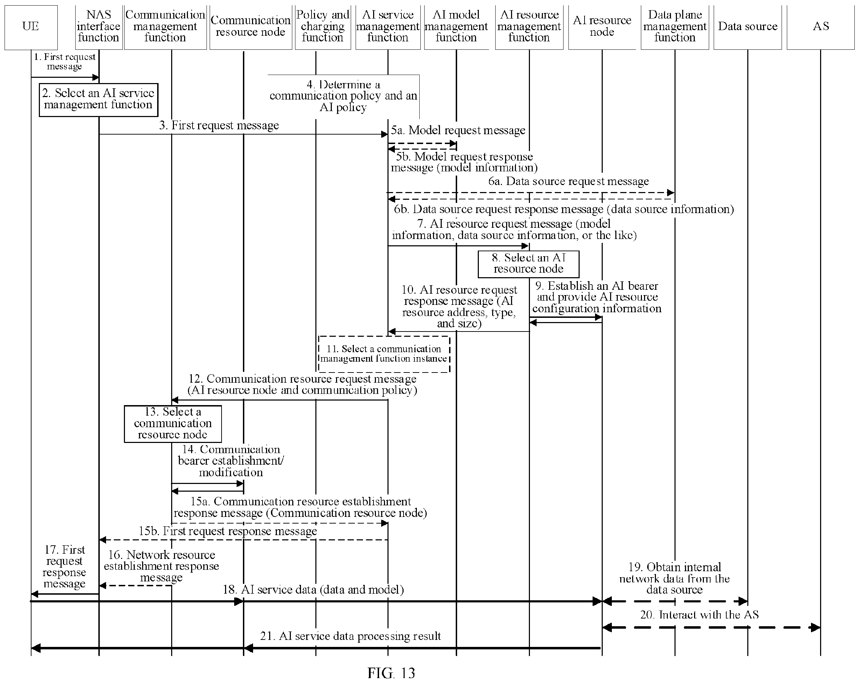

As shown in FIG. 13, this embodiment includes the following steps.

Step 1: The UE sends a first request message to a NAS interface function, where the first request message is used to request a network side to allocate a network resource for an AI service.

The first request message may be a communication resource request message, specifically, may be at least one of the following: a PDU session establishment request message, a PDU session modification request message, and a communication channel establishment request message (used for establishing a data transmission channel). The first request message is generated by the newly added protocol layer (for example, the AI management layer) of the UE, and the first request message is encapsulated in a NAS message. Specifically, an encapsulation manner may be at least one of the following: being in a newly added container (such as an N1 AIM container), used to encapsulate AI-related messages, for example, messages of AI session management, AI channel establishment, or the like.

The first request message includes at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier, including an AI service policy indication negotiated between a UE and a policy and charging function; and
an address of an application server AS.

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience QoE requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

Step 2: The NAS interface function selects the AI service management function instance.

Optionally, before selecting an AI service management function instance, the NAS interface function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

The NAS interface function finds a matching AI service management function instance by using an NRF or according to local configuration information based on at least one of the following:
an area of interest;
UE AI task-related subscription information;
a DNN;
S-NSSAI;
an AI service identifier;
a supported AI service; and
a capability of the AI service management function instance, including a capability of determining AI service processing delay, AI service processing accuracy, an AI service computation load, and so on.

Step 3: The NAS interface function sends a first request message to the AI service management function.

Step 4: The AI service management function determines a communication policy and an AI policy based on the first request message.

Implementation 1: If a dynamic PCC architecture is deployed, the AI service management function sends a policy request message to a policy and charging function, and the policy and charging function allocates a policy based on the policy request message. The request message includes at least one of the following: a UE ID, a PDU session ID, an associated AI session ID, a DNN, S-NSSAI, and one or more items in AI service requirement description information.

Implementation 2: If a dynamic PCC architecture is not deployed, the AI service management function allocates a policy based on at least one of the following: local configuration, an AI service identifier, and a policy ID.

Step 5a: The AI service management function sends a model request message to the AI model management function for determining model information.

Step 5a is an optional step, and Step 5a needs to be performed under at least one of the following conditions:
the AI resource establishment request message does not include model information;
the AI resource establishment request message includes an indication that interaction with the AI model management function is required; and
the AI service management function cannot obtain model information.

The AI service management function selects the AI model management function instance based on at least one of the following:
a DNN;
S-NSSAI;
an AI service identifier;
a supported AI service;
service area information; and
supported model information.

Step 5b: The AI model management function sends a model request response message to the AI service management function, used to indicate model information. In this way, the AI service management function can determine data source information based on the AI model information, and if already determined, step 6 is not performed.

Step 6a: The AI service management function sends a data source request message to the data plane management function, used to determine data source information.

Step 6a is an optional step, and Step 6a needs to be performed under at least one of the following conditions:
the AI resource establishment request message does not include data source information;
the AI resource establishment request message includes an indication that interaction with the data plane management function is required; and
the AI service management function cannot obtain data source information.

The AI service management function selects the data plane management function instance based on at least one of the following:
a DNN;
S-NSSAI;
an AI service identifier;
a supported AI service;
service area information; and
data source information.

Step 6b: The data plane management function sends a model request response to the AI service management function, used to indicate data source information.

In this embodiment, the AI service management function, the AI model management function, and the AI resource management function may be co-located, that is, the AI service management function, the AI model management function, and the AI resource management function may be integrated, and if the AI service management function, the AI model management function, and the AI resource management function are co-located, steps 5 and 6 are omitted.

Step 7: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 8: The AI resource management node selects an appropriate AI resource node based on the AI resource request message.

Step 9: The AI resource management function establishes an AI bearer and provides AI resource configuration information to an AI resource node, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 10: The AI resource management function sends an AI resource request response message to the AI service management function, including AI resource node information, where the AI resource node information includes at least one of the following:
an IP address;
ID information; and
an FQDN.

Step 11: The AI service management function selects the communication management function instance, and the AI service management function may find the communication management function instance using an NRF or according to local configuration information, and the AI service management function selects a communication management function based on at least one of the following: the communication management function supports forwarding AI-related messages, the communication management function supports establishing a bearer for an AI service, and the communication management function supports communication with an AI function (that is, having an interface with the AI function).

Step 11 is an optional step. If the AI service management function does not receive an address of the communication management function instance, this step needs to be performed.

Step 12: The AI service management function generates and sends a communication resource request message to the communication management function, used to request the communication management function to select an appropriate communication resource node, including at least one of the following: a communication policy, AI resource node information, an address of the AI service management function instance, an AI resource node information feedback indication, and PDU session information.

The communication resource request message triggers the communication management function to send a PDU session modification message or a communication channel modification message (used to modify a data transmission channel).

In this case, there is a one-to-one binding relationship between an AI session ID and a PDU session ID.

The AI service management function determines to generate and send a communication resource request message, based on at least one of the following in the first request message: a session type indication, AI description information, and PDU session information.

Step 13: The communication management function instance selects an appropriate communication resource node based on a communication policy and the AI resource node information.

Step 14: The communication management function establishes or modifies a corresponding communication bearer based on the communication policy, where the communication bearer is used to transmit AI service data.

The communication management function may also configure AI resource node information to the communication resource node, used for the communication resource node to process and forward AI service data packets.

Step 15a: The communication management function sends a communication resource establishment response message to the AI service management function, including communication resource node information.

Step 15a is an optional step, and if the communication management function receives an address of the AI service management function instance and/or an AI resource node information feedback indication, this step is performed. Otherwise, the communication management function performs step 16.

Step 15b: The AI service management function sends a first request response message to the NAS interface function, used to inform the network of a resource establishment result, and including AI resource node information and communication resource node information.

Step 16: The communication management function sends a network resource establishment response message to the NAS interface function, used to inform the network of a resource establishment result, and including AI resource node information and communication resource node information.

Step 16 is an optional step.

Step 17: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

The first request response message is encapsulated in a container in the NAS message, for example, encapsulated in an N1 AI management container.

Step 18: An application APP triggers AI service data transmission, where AI service data is carried on a PDU session and routed to the AI resource node via the communication resource node.

The AI service data includes at least one of the following: UE data, and model information;

In this step, the communication management function does not know the AI resource node information, and the UE can only set the AI resource node information as a destination address.

Step 19: Optionally, the AI resource node obtains internal network data from a data source.

The AI resource node determines data source information, including but not limited to at least one of the following manners: obtaining from AI resource configuration information; and obtaining from local configuration.

Step 20: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

Step 21: The AI resource node processes the AI service data based on the network model, UE data, and network data, and feeds back a processing result to the UE.

### Embodiment 4

In this embodiment, an AI service management function acts as a central control node. In this embodiment, based on the protocol stack shown in FIG. 12, a new protocol layer such as an AI management layer is added to the UE, and is responsible for generating AI service messages, such as an AI resource establishment request message, for triggering allocation of an AI resource. The newly added protocol layer is below the NAS-SM layer in related technologies. A message encapsulation manner is: encapsulating a communication resource request message in an AI resource request message, and encapsulating the AI resource request message in a NAS message. The AI service management function generates a communication resource request message, and the AI management layer of the UE generates an AI resource request message.

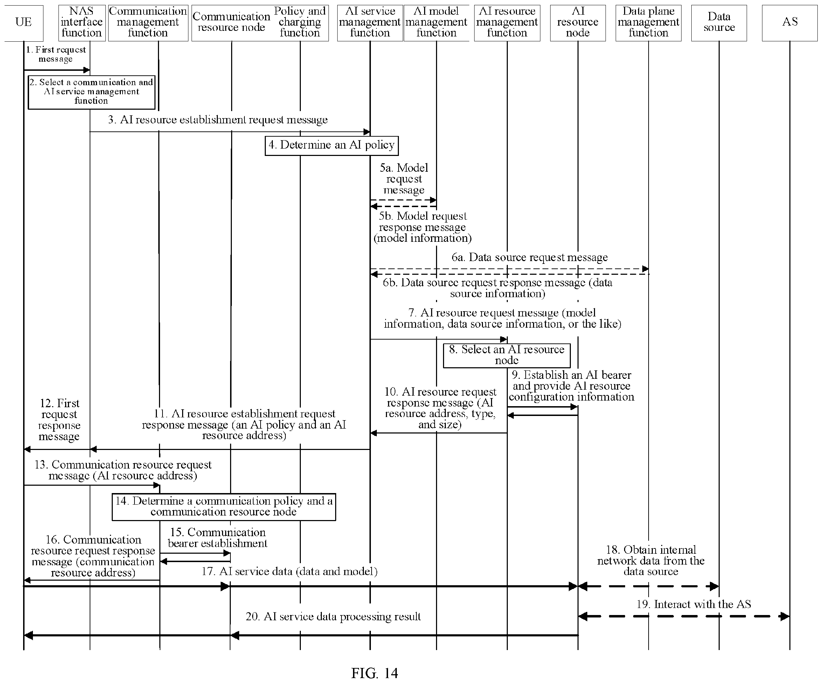

As shown in FIG. 14, this embodiment includes the following steps.

Step 1: The UE sends a first request message to a NAS interface function, where the first request message is used to request a network side to allocate a network resource for an AI service.

The first request message may be an AI resource request message, specifically, may be at least one of the following: an AI resource establishment request message (used for establishing an AI session, where the AI session is a data transmission tunnel between the first network element and the terminal) and an AI session establishment request message. The first request message is generated by the newly added protocol layer (for example, the AI management layer) of the UE, and the first request message is encapsulated in a NAS message. Specifically, an encapsulation manner may be at least one of the following: being encapsulated in a newly added container (used to encapsulate AI-related messages, for example, messages of AI session management, AI channel establishment, or the like).

The first request message includes at least one of the following:
AI service requirement description information;
a data network name DNN;
single network slice selection assistance information S-NSSAI;
a policy reference identifier, including an AI service policy indication negotiated between a UE and a policy and charging function; and
an address of an application server AS.

In this embodiment, the AI service requirement description information is used to indicate an expected AI service quality requirement. Specifically, a user may subscribe to an AI service with an operator network, and then the operator network allocates AI service quality requirements to the user.

In some embodiments, the AI service requirement description information may include at least one of the following:
an AI service identifier, used to identify a requested AI service, where the network side determines, based on the service identifier, a specific AI service requested by the UE, for example, an environment reconstruction service or a face recognition service;
an AI service type, used to indicate a type of a requested AI service, where the network side determines, based on the AI service type, whether the UE requests a training service or an inference service;
an AI service quality of experience QoE requirement, used to indicate service quality expected by the terminal for a requested AI service, including response speed, reliability, and satisfaction of the AI service;
AI service quality of service QoS information, used to indicate network indicators required for a requested AI service, including priority, delay, packet loss rate, packet error rate, peak rate, and the like;
a model parameter, used to indicate a model parameter required for a requested AI service, where the model parameter includes model size, model training algorithm, model precision/accuracy, model manufacturer, model identifier, model function identifier, model architecture, and weight parameter; and
first information, indicating whether network internal data and/or a data source is required. Optionally, the first information is used to indicate whether internal network data needs to be obtained from the data source.

Step 2: The NAS interface function selects the AI service management function instance and the communication management function instance.

Optionally, before selecting an AI service management function instance, the NAS interface function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

The NAS interface function finds a matching AI service management function instance by using an NRF or according to local configuration information based on at least one of the following:
an area of interest;
UE AI task-related subscription information;
a DNN;
S-NSSAI;
an AI service identifier;
a supported AI service; and
a capability of the AI service management function instance, including a capability of determining AI service processing delay, AI service processing accuracy, an AI service computation load, and so on.

Step 3: The NAS interface function sends an AI resource establishment request message to the AI service management function.

Step 4: The AI service management function determines a communication policy and an AI policy based on the AI resource establishment request message.

Implementation 1: If a dynamic PCC architecture is deployed, the AI service management function sends a policy request message to a policy and charging function, and the policy and charging function allocates a policy based on the policy request message. The request message includes at least one of the following: a UE ID, a PDU session ID, an associated AI session ID, a DNN, S-NSSAI, and one or more items in AI service requirement description information.

Implementation 2: If a dynamic PCC architecture is not deployed, the AI service management function allocates a policy based on at least one of the following: local configuration, an AI service identifier, and a policy ID.

Step 5a: The AI service management function sends a model request message to the AI model management function for determining model information.

Step 5a is an optional step, and Step 5a needs to be performed under at least one of the following conditions:
the AI resource establishment request message does not include model information;
the AI resource establishment request message includes an indication that interaction with the AI model management function is required; and
the AI service management function cannot obtain model information.

The AI service management function selects the AI model management function instance based on at least one of the following:
a DNN;
S-NSSAI;
an AI service identifier;
a supported AI service;
service area information; and
supported model information.

Step 5b: The AI model management function sends a model request response message to the AI service management function, used to indicate model information. In this way, the AI service management function can determine data source information based on the AI model information, and if already determined, step 6 is not performed.

Step 6a: The AI service management function sends a data source request message to the data plane management function, used to determine data source information.

Step 6a is an optional step, and Step 6a needs to be performed under at least one of the following conditions:
the AI resource establishment request message does not include data source information;
the AI resource establishment request message includes an indication that interaction with the data plane management function is required; and
the AI service management function cannot obtain data source information.

The AI service management function selects the data plane management function instance based on at least one of the following:
a DNN;
S-NSSAI;
an AI service identifier;
a supported AI service;
service area information; and
data source information.

Step 6b: The data plane management function sends a model request response to the AI service management function, used to indicate data source information.

In this embodiment, the AI service management function, the AI model management function, and the AI resource management function may be co-located, that is, the AI service management function, the AI model management function, and the AI resource management function may be integrated, and if the AI service management function, the AI model management function, and the AI resource management function are co-located, steps 5 and 6 are omitted.

Step 7: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 8: The AI resource management node selects an appropriate AI resource node based on the AI resource request message.

Step 9: The AI resource management function establishes an AI bearer and provides AI resource configuration information to an AI resource node, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 10: The AI resource management function sends an AI resource request response message to the AI service management function, including AI resource node information, where the AI resource node information includes at least one of the following:
an IP address;
ID information; and
an FQDN.

Step 11: The AI service management function sends an AI resource establishment request response message to the NAS interface function, used to feed back an AI resource establishment result, and including at least one of the following: AI resource node information and an AI policy.

Step 12: The NAS interface function sends a first request response message corresponding to the request message in step 1 to the UE.

Step 13: The UE determines that a communication resource need to be established, and sends a communication resource establishment request message to the communication management function, used to trigger the network to allocate a communication resource for the AI service, where the communication resource establishment request message includes an address of an AI resource node.

The UE determines based on at least one of the following to send the request, including received AI resource node information and AI service requirement description information.

Step 14: The communication management function instance selects an appropriate communication resource node based on a communication policy and the AI resource node information.

Step 15: The communication management function establishes or modifies a corresponding communication bearer based on the communication policy, where the communication bearer is used to transmit AI service data.

The communication management function may also configure AI resource node information to the communication resource node, used for the communication resource node to process and forward AI service data packets.

Step 16: The communication management function sends a communication resource establishment request response to inform a communication resource establishment result.

Step 17: An application APP triggers AI service data transmission, where AI service data is carried on a PDU session and routed to the AI resource node via the communication resource node.

The AI service data includes at least one of the following: UE data, and model information;

In this step, the communication management function does not know the AI resource node information, and the UE can only set the AI resource node information as a destination address.

Step 18: Optionally, the AI resource node obtains internal network data from a data source.

The AI resource node determines data source information, including but not limited to at least one of the following manners: obtaining from AI resource configuration information; and obtaining from local configuration.

Step 19: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

Step 20: The AI resource node processes the AI service data based on the network model, UE data, and network data, and feeds back a processing result to the UE.

### Embodiment 5

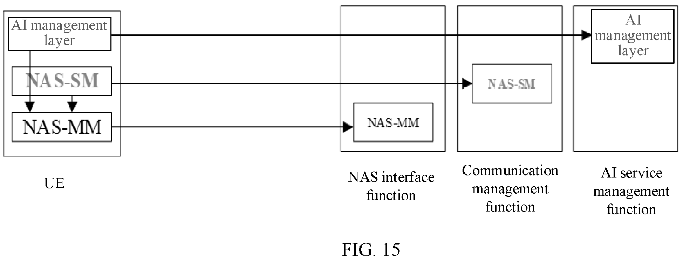

In this embodiment, a NAS interface function acts as a central control node. In this embodiment, based on the protocol stack shown in FIG. 15, a new protocol layer such as an AI management layer is added to the UE. The AI management layer is at the same level as the NAS-SM layer. A message encapsulation manner is: encapsulating a communication resource request message and an AI resource request message in a NAS message. The NAS interface function simultaneously forwards the communication resource request message and the AI resource request message.

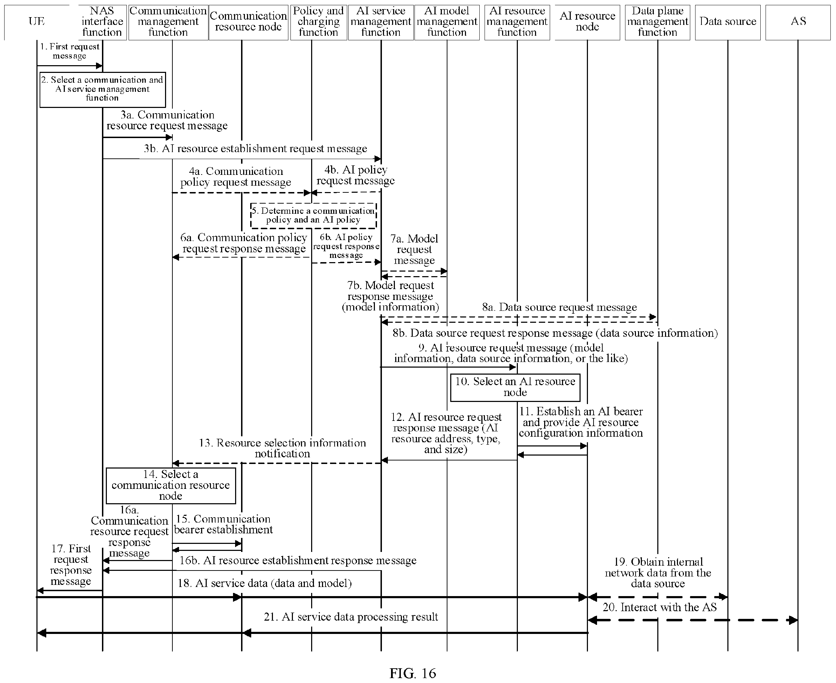

As shown in FIG. 16, this embodiment includes the following steps.

Step 1: The UE sends a first request message to a NAS interface function, where the first request message is used to request a network side to allocate a network resource for an AI service.

The first request message may be at least one of the following: a registration message, a service request message, an uplink NAS transport message, and a newly added control message (used for establishing a control connection).

Step 2: The NAS interface function selects the communication management function and the AI service management function based on the first request message sent by the UE.

The NAS interface function can find a communication management function instance using an NRF or based on local configuration information, similar to the AMF selecting an SMF during PDU session establishment. The NAS interface function needs to consider additional factors during selection of the communication management function, and the considered factors include at least one of the following: the communication management function supports forwarding AI-related messages, the communication management function supports establishing a bearer for AI services, and the communication management function supports communication with an AI function (that is, having an interface with the AI function).

Optionally, before selecting an AI service management function instance, the NAS interface function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

Step 3a: The NAS interface function sends a communication resource request message to the communication management function, for requesting allocation of a corresponding communication resource for the AI service.

The communication resource request message may be at least one of the following: a PDU session establishment request message, a PDU session modification message, and a communication channel establishment request message (used for establishing a data transmission channel).

Step 3b: The NAS interface function sends an AI resource establishment request message to the AI service management function, for requesting allocation of a corresponding AI resource for the AI service. The AI resource establishment request message includes but is not limited to at least one of the following: an AI policy, communication resource node information, an address of the communication management function instance, and an AI resource node information feedback indication.

If a dynamic policy architecture is deployed in the network, this embodiment includes the following steps 4 to 6.

Step 4a: The communication management function sends a communication policy request message to a policy and charging function, used to request a dynamic communication policy applicable to a PDU session. The communication policy request message includes at least one of the following: a UE ID, a PDU session ID, a DNN, S-NSSAI, an associated AI session ID, AI service requirement description information, and the like.

Step 4b: The AI service management function sends an AI policy request message to the policy and charging function, used to request a dynamic AI policy applicable to an AI session. The AI policy request message includes at least one of the following: a UE ID, an AI session ID, a DNN, S-NSSAI, an associated PDU session ID, AI service requirement description information, or the like.

Step 5: The policy and charging function generates a communication policy and an AI policy corresponding to the AI service according to steps 4a and 4b. The policy and charging function needs to comprehensively consider an end-to-end service requirement of the AI service during allocation of the communication policy and the AI policy.

Step 6a: The policy and charging function sends a communication policy request response message to the communication management function, including but not limited to at least one of the following: a communication policy and an AS address.

Step 6b: The policy and charging function sends an AI policy request response message to the AI service management function, including but not limited to at least one of the following: an AI policy and an AS address.

If a dynamic PCC architecture is not deployed in the network, steps 4 to 6 are omitted, and after the following step is performed, step 7 is performed.

The communication management function determines a communication policy based on the local configuration, and the AI service management function determines an AI policy based on the local configuration.

Step 7a: The AI service management function sends a model request message to the AI model management function for determining model information.

Step 7a is an optional step, and the step needs to be performed under at least one of the following conditions:
the AI session establishment request message does not include model information;
the AI session establishment request message includes an indication that interaction with the AI model management function is required; and
the AI service management function cannot obtain model information.

The AI service management function selects the AI model management function instance by considering at least one of the following factors:
a DNN;
S-NSSAI;
an AI service identifier;
a supported AI service;
service area information; and
supported model information.

Step 7b: The AI model management function sends a model request response message to the AI service management function, used to indicate model information.

The AI service management function can determine data source information based on the AI model information, and if already determined, step 8 is not performed.

Step 8a: The AI service management function sends a data source request message to the data plane management function, used to determine data source information.

Step 8a is an optional step, and the step needs to be performed under at least one of the following conditions:
the AI session establishment request message does not include data source information;
the AI session establishment request message includes an indication that interaction with the data plane management function is required; and
the AI service management function cannot obtain data source information.

The AI service management function selects the data plane management function instance by considering at least one of the following factors:
a DNN;
S-NSSAI;
an AI service identifier;
a supported AI service;
service area information; and
data source information.

Step 8b: The data plane management function sends a model request response message to the AI service management function, used to indicate data source information.

In this embodiment, the AI service management function, the AI model management function, and the AI resource management function may be co-located; and if co-located, steps 7 and 8 are omitted.

In this embodiment, the AI service management function may first determine an AI resource node and feed it back to the communication management function, and then the communication management function selects a communication resource node. The following steps are included:

Step 9: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 10: The AI resource management node selects an appropriate AI resource node based on the AI resource request message.

Step 11: The AI resource management function establishes an AI bearer and provides AI resource configuration information, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 12: The AI resource management function sends an AI resource request response message to the AI service management function, including AI resource node information, where the AI resource node information includes at least one of the following:
an IP address;
ID information; and
an FQDN.

Step 13: The AI service management function sends a resource selection information notification to the communication management function, used for the communication management function to comprehensively consider impact of communication and AI processing when selecting a communication resource node, ensuring end-to-end QoS of an AI service, including at least one of the following:
AI resource node information; and
an AI policy.

Before the AI service management function sends the resource selection information notification to the communication management function, the communication management function needs to subscribe to the AI resource establishment or modification notification so as to know that the AI resource has changed.

Step 14: The communication management function selects an appropriate communication resource node based on the communication policy, AI resource node information, and the AI policy.

The communication resource node information includes at least one of the following:
an IP address;
ID information; and
an FQDN.

Step 15: The communication management function establishes or modifies a corresponding communication bearer based on the communication policy, similar to an N4 session/N3 tunnel establishment or modification procedure in related technologies, where the communication bearer is used to transmit AI service data.

The communication management function may also configure AI resource node information to the communication resource node, used for the communication resource node to process and forward AI service data packets.

Step 16a: The communication management function sends a communication resource request response message to the NAS interface function to inform that communication resource allocation is successful, which may include the communication resource node information.

Step 16b: The AI service management function sends an AI resource establishment response message to the NAS interface function to inform that the AI resource allocation is successful, which may include the AI resource node information.

Step 17: The NAS interface function sends a first request response message corresponding to the request message in step 1 to the UE, used to notify the UE of a result of the AI service request, including but not limited to at least one of the following: communication resource node information and AI resource node information.

Step 18: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

The first request response message is encapsulated in a container in the NAS message, for example, encapsulated in an N1 AI management container.

Step 19: An application APP triggers AI service data transmission, where AI service data is carried on a PDU session and routed to the AI resource node via the communication resource node.

The AI service data includes at least one of the following: UE data, and model information;
In this step, the communication management function does not know the AI resource node information, and the UE can only set the AI resource node information as a destination address.

Step 20: Optionally, the AI resource node obtains internal network data from a data source.

The AI resource node determines data source information, including but not limited to at least one of the following manners: obtaining from AI resource configuration information; and obtaining from local configuration.

Step 21: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

In this embodiment, the communication management function may determine a communication resource node first and feed it back to the AI service management function, and then the AI service management function selects an AI resource node.

In this embodiment, after step 6, the following step is included:
Step 7: The communication management function selects an appropriate communication resource node based on the communication policy, AI resource node information, and the AI policy.

The communication resource node information includes at least one of the following:
an IP address;
ID information; and
an FQDN.

Step 8: The communication management function establishes or modifies a corresponding communication bearer based on the communication policy, similar to an N4 session/N3 tunnel establishment or modification procedure in related technologies, where the communication bearer is used to transmit AI service data.

The communication management function may also configure AI resource node information to the communication resource node, used for the communication resource node to process and forward AI service data packets.

Step 9: The communication management function sends a resource selection information notification to the AI service management function, used for the AI service management function to comprehensively consider impact of communication and AI processing when selecting an AI resource node, ensuring end-to-end QoS of an AI service, including at least one of the following:
communication resource node information; and
a communication policy.

Before the communication management function sends the resource selection information notification to the AI service management function, the AI service management function needs to subscribe to the communication resource establishment or modification notification so as to know that the communication resource has changed.

Step 10a: The AI service management function sends a model request message to the AI model management function for determining model information.

Step 10a is an optional step, and the step needs to be performed under at least one of the following conditions:
the AI session establishment request message does not include model information;
the AI session establishment request message includes an indication that interaction with the AI model management function is required; and
the AI service management function cannot obtain model information.

The AI service management function selects the AI model management function instance by considering at least one of the following factors:
a DNN;
S-NSSAI;
an AI service identifier;
a supported AI service;
service area information; and
supported model information.

Step 10b: The AI model management function sends a model request response message to the AI service management function, used to indicate model information.

The AI service management function can determine data source information based on the AI model information, and if already determined, step 11 is not performed.

Step 11a: The AI service management function sends a data source request message to the data plane management function, used to determine data source information.

Step 11a is an optional step, and the step needs to be performed under at least one of the following conditions:
the AI session establishment request message does not include data source information;
the AI session establishment request message includes an indication that interaction with the data plane management function is required; and
the AI service management function cannot obtain data source information.

The AI service management function selects the data plane management function instance by considering at least one of the following factors:
a DNN;
S-NSSAI;
an AI service identifier;
a supported AI service;
service area information; and
data source information.

Step 11b: The data plane management function sends a model request response message to the AI service management function, used to indicate data source information.

In this embodiment, the AI service management function, the AI model management function, and the AI resource management function may be co-located; and if co-located, steps 7 and 8 are omitted.

Step 12: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 13: The AI resource management node selects an appropriate AI resource node based on the AI resource request message.

Step 14: The AI resource management function establishes an AI bearer and provides AI resource configuration information, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 15: The AI resource management function sends an AI resource request response message to the AI service management function, including AI resource node information, where the AI resource node information includes at least one of the following:
an IP address;
ID information; and
an FQDN.

Step 16a: The communication management function sends a communication resource request response message to the NAS interface function to inform that communication resource allocation is successful, which may include the communication resource node information.

Step 16b: The AI service management function sends an AI resource establishment response message to the NAS interface function to inform that the AI resource allocation is successful, which may include the AI resource node information.

Step 17: The NAS interface function sends a first request response message corresponding to the request message in step 1 to the UE, used to notify the UE of a result of the AI service request, including but not limited to at least one of the following: communication resource node and AI resource node information.

Step 18: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

The first request response message is encapsulated in a container in the NAS message, for example, encapsulated in an N1 AI management container.

Step 19: An application APP triggers AI service data transmission, where AI service data is carried on a PDU session and routed to the AI resource node via the communication resource node.

The AI service data includes at least one of the following: UE data, and model information;

In this step, the communication management function does not know the AI resource node information, and the UE can only set the AI resource node information as a destination address.

Step 20: Optionally, the AI resource node obtains internal network data from a data source.

The AI resource node determines data source information, including but not limited to at least one of the following manners: obtaining from AI resource configuration information; and obtaining from local configuration.

Step 21: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

### Embodiment 6

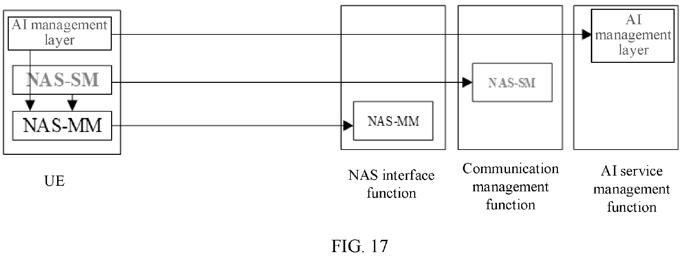

In this embodiment, a NAS interface function acts as a central control node. In this embodiment, based on the protocol stack shown in FIG. 17, a new protocol layer such as an AI management layer is added to the UE. The AI management layer is at the same level as the NAS-SM layer. The NAS interface function determines a sequence in which the forwarding NAS interface function simultaneously forwards the communication resource request message and the AI resource request message in parallel.

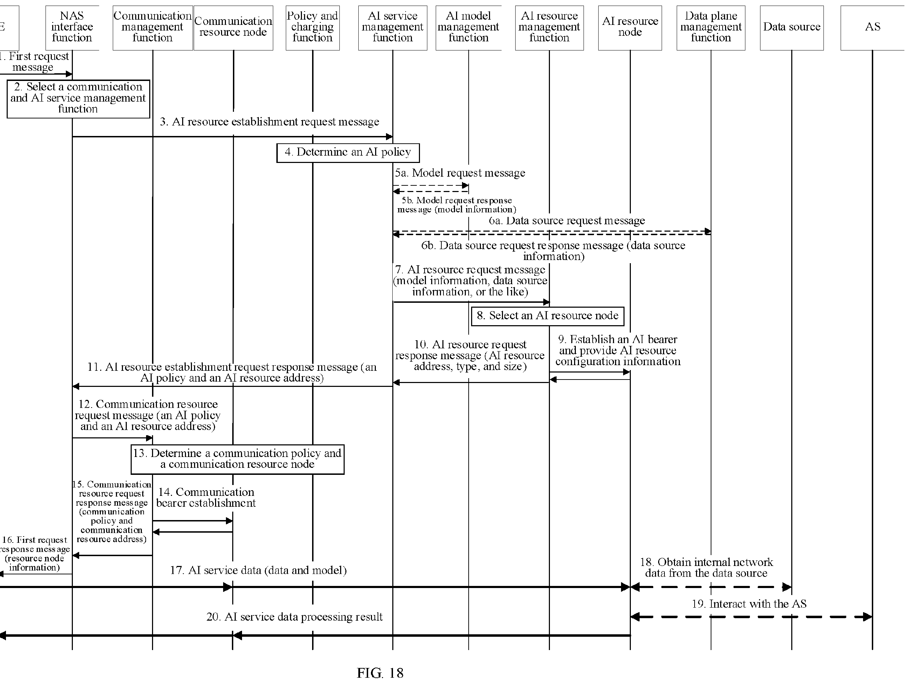

As shown in FIG. 18, this embodiment includes the following steps.

Step 1: The UE sends a first request message to a NAS interface function, where the first request message is used to request a network side to allocate a network resource for an AI service.

The first request message may be at least one of the following: a registration message, a service request message, an uplink NAS transport message, and a newly added control message (used for establishing a control connection).

Step 2: The NAS interface function selects the communication management function and the AI service management function based on the first request message sent by the UE.

The NAS interface function can find a communication management function instance using an NRF or based on local configuration information, similar to the AMF selecting an SMF during PDU session establishment. The NAS interface function needs to consider additional factors during selection of the communication management function, and the considered factors include at least one of the following: the communication management function supports forwarding AI-related messages, the communication management function supports establishing a bearer for AI services, and the communication management function supports communication with an AI function (that is, having an interface with the AI function).

Optionally, before selecting an AI service management function instance, the NAS interface function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

Step 3: The NAS interface function sends an AI resource establishment request message to the AI service management function, for requesting allocation of a corresponding AI resource for the AI service. The AI resource establishment request message includes but is not limited to at least one of the following: an AI policy, communication resource node information, an address of the communication management function instance, and an AI resource node information feedback indication.

In this embodiment, the NAS interface function determines to first send an AI resource establishment request message, based on at least one of the following: local configuration, and a resource determination indication (used to indicate whether to first determine an AI resource or a communication resource).

Step 4: The AI service management function sends an AI policy request message to the policy and charging function, used to request a dynamic AI policy applicable to an AI session. The AI policy request message includes at least one of the following: a UE ID, an AI session ID, a DNN, S-NSSAI, an associated PDU session ID, AI service requirement description information, or the like.

The policy and charging function generates an AI policy corresponding to the AI service. The policy and charging function needs to comprehensively consider an end-to-end service requirement of the AI service during allocation of the AI policy. The policy and charging function sends an AI policy request response message to the AI service management function, including but not limited to at least one of the following: an AI policy and an AS address.

Step 5a: The AI service management function sends a model request message to the AI model management function for determining model information.

Step 5a is an optional step, and the step needs to be performed under at least one of the following conditions:
the AI session establishment request message does not include model information;
the AI session establishment request message includes an indication that interaction with the AI model management function is required; and
the AI service management function cannot obtain model information.

The AI service management function selects the AI model management function instance by considering at least one of the following factors:
a DNN;
S-NSSAI;
an AI service identifier;
a supported AI service;
service area information; and
supported model information.

Step 5b: The AI model management function sends a model request response message to the AI service management function, used to indicate model information.

The AI service management function can determine data source information based on the AI model information, and if already determined, step 6 is not performed.

Step 6a: The AI service management function sends a data source request message to the data plane management function, used to determine data source information.

Step 6a is an optional step, and the step needs to be performed under at least one of the following conditions:
the AI session establishment request message does not include data source information;
the AI session establishment request message includes an indication that interaction with the data plane management function is required; and
the AI service management function cannot obtain data source information.

The AI service management function selects the data plane management function instance by considering at least one of the following factors:
a DNN;
S-NSSAI;
an AI service identifier;
a supported AI service;
service area information; and
data source information.

Step 6b: The data plane management function sends a model request response message to the AI service management function, used to indicate data source information.

Step 7: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 8: The AI resource management node selects an appropriate AI resource node based on the AI resource request message.

Step 9: The AI resource management function establishes an AI bearer and provides AI resource configuration information, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 10: The AI resource management function sends an AI resource request response message to the AI service management function, including AI resource node information, where the AI resource node information includes at least one of the following:
an IP address;
ID information; and
an FQDN.

Step 11: The AI service management function sends an AI resource establishment response message to the NAS interface function to inform that the AI resource allocation is successful, which may include the AI resource node information.

Step 12: The NAS interface function sends a communication resource request message to the communication management function, for requesting allocation of a corresponding communication resource for the AI service.

The communication resource request message may be at least one of the following: a PDU session establishment request message, a PDU session modification message, and a communication channel establishment request message (used for establishing a data transmission channel).

Step 13: The communication management function sends a communication policy request message to a policy and charging function, used to request a dynamic communication policy applicable to a PDU session. The communication policy request message includes at least one of the following: a UE ID, a PDU session ID, a DNN, S-NSSAI, an associated AI session ID, AI service requirement description information, and the like.

The policy and charging function generates a communication policy corresponding to the AI service. The policy and charging function needs to comprehensively consider an end-to-end service requirement of the AI service during allocation of the communication policy.

The policy and charging function sends a communication policy request response message to the communication management function, including but not limited to at least one of the following: a communication policy and an AS address.

The communication management function selects an appropriate communication resource node based on the communication policy, AI resource node information, and the AI policy.

The communication resource node information includes at least one of the following:
an IP address;
ID information; and
an FQDN.

Step 14: The communication management function establishes or modifies a corresponding communication bearer based on the communication policy, similar to an N4 session/N3 tunnel establishment or modification procedure in related technologies, where the communication bearer is used to transmit AI service data.

The communication management function may also configure AI resource node information to the communication resource node, used for the communication resource node to process and forward AI service data packets.

Step 15: The communication management function sends a communication resource request response message to the NAS interface function to inform that communication resource allocation is successful, which may include the communication resource node information.

Step 16: The NAS interface function sends a first request response message corresponding to the request message in step 1 to the UE, used to notify the UE of a result of the AI service request, including but not limited to at least one of the following: communication resource node and AI resource node information.

Step 17: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

The first request response message is encapsulated in a container in the NAS message, for example, encapsulated in an N1 AI management container.

Step 18: An application APP triggers AI service data transmission, where AI service data is carried on a PDU session and routed to the AI resource node via the communication resource node.

The AI service data includes at least one of the following: UE data, and model information;
In this step, the communication management function does not know the AI resource node information, and the UE can only set the AI resource node information as a destination address.

Step 19: Optionally, the AI resource node obtains internal network data from a data source.

The AI resource node determines data source information, including but not limited to at least one of the following manners: obtaining from AI resource configuration information; and obtaining from local configuration.

Step 20: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

In this embodiment, the NAS interface function may alternatively send a communication resource message first, including the following steps:

Step 1: The UE sends a first request message to a NAS interface function, where the first request message is used to request a network side to allocate a network resource for an AI service.

The first request message may be at least one of the following: a registration message, a service request message, an uplink NAS transport message, and a newly added control message (used for establishing a control connection).

Step 2: The NAS interface function selects the communication management function and the AI service management function based on the first request message sent by the UE.

The NAS interface function can find a communication management function instance using an NRF or based on local configuration information, similar to the AMF selecting an SMF during PDU session establishment. The NAS interface function needs to consider additional factors during selection of the communication management function, and the considered factors include at least one of the following: the communication management function supports forwarding AI-related messages, the communication management function supports establishing a bearer for AI services, and the communication management function supports communication with an AI function (that is, having an interface with the AI function).

Optionally, before selecting an AI service management function instance, the NAS interface function may request subscription data of the UE from a unified data management (Unified Data Management, UDM) function and/or a Unified Data Repository (Unified Data Repository, UDR) to verify whether subscription information related to the AI service is present. If present, a subsequent process is performed; or if absent, the NAS interface function rejects an AI service request of the UE.

Step 3: The NAS interface function sends a communication resource request message to the communication management function, for requesting allocation of a corresponding communication resource for the AI service.

The communication resource request message may be at least one of the following: a PDU session establishment request message, a PDU session modification message, and a communication channel establishment request message (used for establishing a data transmission channel).

Step 4: The communication management function sends a communication policy request message to a policy and charging function, used to request a dynamic communication policy applicable to a PDU session. The communication policy request message includes at least one of the following: a UE ID, a PDU session ID, a DNN, S-NSSAI, an associated AI session ID, AI service requirement description information, and the like.

The policy and charging function generates a communication policy corresponding to the AI service. The policy and charging function needs to comprehensively consider an end-to-end service requirement of the AI service during allocation of the communication policy.

The policy and charging function sends a communication policy request response message to the communication management function, including but not limited to at least one of the following: a communication policy and an AS address.

The communication management function selects an appropriate communication resource node based on the communication policy, AI resource node information, and the AI policy.

The communication resource node information includes at least one of the following:
an IP address;
ID information; and
an FQDN.

Step 5: The communication management function establishes or modifies a corresponding communication bearer based on the communication policy, similar to an N4 session/N3 tunnel establishment or modification procedure in related technologies, where the communication bearer is used to transmit AI service data.

The communication management function may also configure AI resource node information to the communication resource node, used for the communication resource node to process and forward AI service data packets.

Step 6: The communication management function sends a communication resource request response message to the NAS interface function to inform that communication resource allocation is successful, which may include the communication resource node information.

Step 7: The NAS interface function sends an AI resource establishment request message to the AI service management function, for requesting allocation of a corresponding AI resource for the AI service. The AI resource establishment request message includes but is not limited to at least one of the following: an AI policy, communication resource node information, an address of the communication management function instance, and an AI resource node information feedback indication.

Step 8: The AI service management function sends an AI policy request message to the policy and charging function, used to request a dynamic AI policy applicable to an AI session. The AI policy request message includes at least one of the following: a UE ID, an AI session ID, a DNN, S-NSSAI, an associated PDU session ID, AI service requirement description information, or the like.

The policy and charging function generates an AI policy corresponding to the AI service. The policy and charging function needs to comprehensively consider an end-to-end service requirement of the AI service during allocation of the AI policy.

The policy and charging function sends an AI policy request response message to the AI service management function, including but not limited to at least one of the following: an AI policy and an AS address.

Step 9a: The AI service management function sends a model request message to the AI model management function for determining model information.

Step 9a is an optional step, and the step needs to be performed under at least one of the following conditions:
the AI session establishment request message does not include model information;
the AI session establishment request message includes an indication that interaction with the AI model management function is required; and
the AI service management function cannot obtain model information.

The AI service management function selects the AI model management function instance by considering at least one of the following factors:
a DNN;
S-NSSAI;
an AI service identifier;
a supported AI service;
service area information; and
supported model information.

Step 9b: The AI model management function sends a model request response message to the AI service management function, used to indicate model information.

The AI service management function can determine data source information based on the AI model information, and if already determined, step 10 is not performed.

Step 10a: The AI service management function sends a data source request message to the data plane management function, used to determine data source information.

Step 10a is an optional step, and the step needs to be performed under at least one of the following conditions:
the AI session establishment request message does not include data source information;
the AI session establishment request message includes an indication that interaction with the data plane management function is required; and
the AI service management function cannot obtain data source information.

The AI service management function selects the data plane management function instance by considering at least one of the following factors:
a DNN;
S-NSSAI;
an AI service identifier;
a supported AI service;
service area information; and
data source information.

Step 10b: The data plane management function sends a model request response message to the AI service management function, used to indicate data source information.

Step 11: The AI service management function sends an AI resource request message to the AI resource management function, and the AI resource management function determines an appropriate AI resource node based on the AI resource request message and the AI policy.

The AI resource request message includes at least one of the following:
model information (a model or a model download address);
data source information (a data source address);
an AI service computation load (a computing power size and a type); and
an AS address.

Step 12: The AI resource management node selects an appropriate AI resource node based on the AI resource request message.

Step 13: The AI resource management function establishes an AI bearer and provides AI resource configuration information, for guiding the AI resource node to process and forward AI service data.

The AI resource configuration information includes at least one of the following:
data source information (a data source address);
AI service detection information, used for the AI resource node to detect and identify AI service traffic;
an AI service processing rule, used for the AI resource node to process and forward AI service traffic; and
an AS address.

Step 14: The AI resource management function sends an AI resource request response message to the AI service management function, including AI resource node information, where the AI resource node information includes at least one of the following:
an IP address;
ID information; and
an FQDN.

Step 15: The AI service management function sends an AI resource establishment response message to the NAS interface function to inform that the AI resource allocation is successful, which may include the AI resource node information.

Step 16: The NAS interface function sends a first request response message corresponding to the request message in step 1 to the UE, used to notify the UE of a result of the AI service request, including but not limited to at least one of the following: communication resource node and AI resource node information.

Step 17: The NAS interface function sends a first request response message corresponding to the request message in step 1 to the UE, used to notify the UE of a result of the AI service request, including AI resource node information, where optionally, the first request response message may further include at least one of the following: communication resource node information, and model information.

The first request response message is encapsulated in a container in the NAS message, for example, encapsulated in an N1 AI management container.

Step 18: An application APP triggers AI service data transmission, where AI service data is carried on a PDU session and routed to the AI resource node via the communication resource node.

The AI service data includes at least one of the following: UE data, and model information;

In this step, the communication management function does not know the AI resource node information, and the UE can only set the AI resource node information as a destination address.

Step 19: Optionally, the AI resource node obtains internal network data from a data source.

The AI resource node determines data source information, including but not limited to at least one of the following manners: obtaining from AI resource configuration information; and obtaining from local configuration.

Step 20: Optionally, the AI resource node interacts with the AS according to a service level agreement (Service Level Agreement, SLA) for executing a complete AI service logic. The SLA indicates that the AI resource node performs only part of service processing.

The AI resource node determines an AS address, including but not limited to at least one of the following manners: obtaining from AI resource configuration information; and obtaining from local configuration.

### Embodiment 7

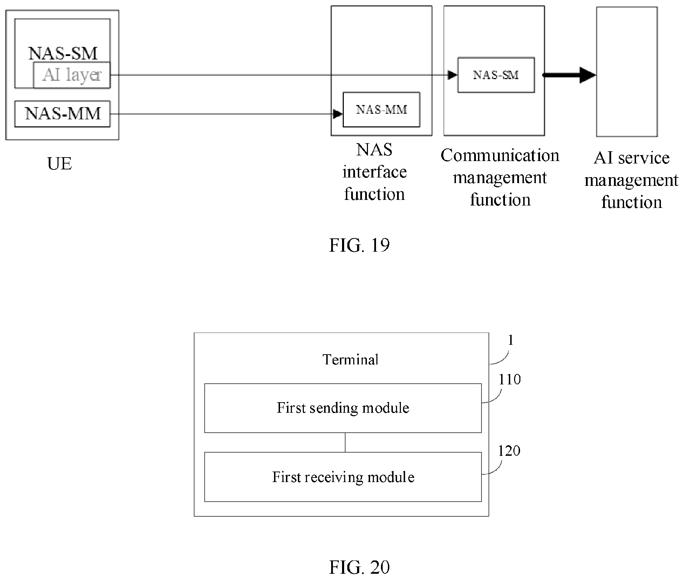

In this embodiment, a communication management function acts as a central control node. In this embodiment, the NAS-SM layer is enhanced based on the protocol stack shown in FIG. 19. When the NAS-SM layer generates the communication resource request message, AI service description information is included, for indicating the network to allocate an AI resource. A message encapsulation manner is: encapsulating the AI service description information in a communication resource request message, and encapsulating the communication resource request message in a NAS message.

In this embodiment, an implementation is that the communication management function and the AI service management function are separately provided. The steps in this embodiment are similar to those in embodiment 1, with differences in that: the communication management function generates an AI resource establishment request message and sends it to the AI service management function, where this step is an interaction between network elements; and the communication management function can parse AI resource node information.

Another implementation is that the communication management function and the AI service management function are co-located, and the communication management function is responsible for allocating AI resources.

The execution subject of the AI service connection establishment method provided in the embodiments of this application may be an AI service connection establishment apparatus. In the embodiments of this application, the AI service connection establishment apparatus provided in the embodiments of this application is described by using the AI service connection establishment method being executed by the AI service connection establishment apparatus as an example.

Referring to FIG. 20, FIG. 20 is a schematic structural diagram of an AI service connection establishment apparatus according to an embodiment of this application. The apparatus is applied to a terminal 1, and as shown in FIG. 20, the AI service connection establishment apparatus includes:
a first sending module 110, configured to send a first request message to a network side, where the first request message is used to request the network side to allocate a network resource for an AI service; and
a first receiving module 120, configured to receive a first request response message returned by the network side, where the first request response message includes at least one of the following: information of a first network element allocated by the network side for the AI service, information of a second network element allocated by the network side for the AI service, and model information.

In this embodiment of this application, the terminal requests the network side to allocate a network resource for the AI service, and the network side can allocate a communication resource and an AI resource for the AI service according to the request from the terminal, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

In some embodiments, the first request message includes at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier; and
an address of an application server AS.

In some embodiments, the AI service requirement description information includes at least one of the following:
an AI service identifier;
an AI service type;
an AI service quality of experience QoE requirement;
AI service quality of service QoS information;
a model parameter; and
first information, indicating whether network internal data and/or a data source is required. Optionally, the first information is used to indicate whether internal network data needs to be obtained from the data source.

In some embodiments, the type of the first request message includes at least one of the following:
a communication resource request message, used to request the network side to allocate a communication resource for an AI service;
an AI resource request message, used to request the network side to allocate an AI resource for an AI service; and
a non-access stratum NAS message, used to request the network side to allocate a network resource for an AI service.

In some embodiments, the communication resource request message includes at least one of the following:
a protocol data unit PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

The AI resource request message includes at least one of the following:
an AI resource establishment request message, used to establish an AI session, where the AI session is a data transmission tunnel between the first network element and the terminal; and
an AI session establishment request message.

The NAS message includes at least one of the following:
a registration message;
a service request message;
an uplink NAS transport message; and
a first control message, used to establish or modify a control signaling connection.

In some embodiments, the first sending module 110 is further configured to send AI service data to the first network element, where the AI service data is transported via an AI session and routed to the first network element via the second network element; and
the first receiving module 120 is further configured to receive an AI service data processing result returned by the first network element.

In some embodiments, the AI service data processing result is obtained by the first network element based on at least one of a model, terminal data, and internal network data, and the internal network data is obtained by the first network element from a third network element.

The AI service connection establishment apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

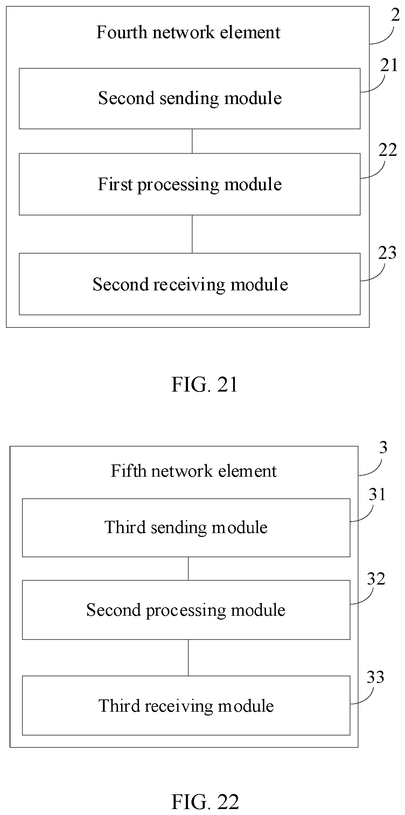

Referring to FIG. 21, FIG. 21 is a schematic structural diagram of an AI service connection establishment apparatus according to an embodiment of this application. The apparatus is applied to a fourth network element 2, and as shown in FIG. 21, the AI service connection establishment apparatus includes:
a second receiving module 23, configured to receive a communication resource request message, where the communication resource request message is used to request a network side to allocate a communication resource for an AI service;
a first processing module 22, configured to allocate a communication resource based on the communication resource request message; and
a second sending module 21, configured to return a communication resource establishment response message, where the communication resource establishment response message includes at least one of the following: information of a first network element allocated by the network side for the AI service, information of a second network element allocated by the network side for the AI service, and model information.

In this embodiment of this application, the network side can allocate a communication resource and an AI resource for the AI service, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

In some embodiments, the fourth network element satisfies at least one of the following:
the fourth network element supports forwarding an AI resource request message;
the fourth network element supports establishing a bearer for an AI service;
the fourth network element supports communication with an AI network function; and
the fourth network element supports selecting an AI network function.

In some embodiments, the communication resource request message includes at least one of the following:
a terminal identifier;
a protocol data unit PDU session identifier;
an associated AI session identifier;
a data network name DNN;
single network slice selection assistance information S-NSSAI;
a session type indication, used to indicate whether a session is a PDU session or an AI session;
PDU session information, used to indicate an attribute of a PDU session;
AI service requirement description information;
an address of a fifth network element; and
an address of an application server AS.

In some embodiments, a type of the communication resource request message includes at least one of the following:
a PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

In some embodiments, the first processing module 22 is further configured to select a fifth network element, and the second sending module 21 is further configured to send an AI resource establishment request message to the fifth network element, where the AI resource establishment request message is used to request the network side to allocate an AI resource for an AI service, and the AI resource establishment request message is generated by a terminal or the fourth network element;.

The second receiving module 23 is further configured to receive an AI resource establishment response message returned by the fifth network element, where the AI resource establishment response message includes the information of the first network element allocated for the AI service.

In some embodiments, in a case that the type of the communication resource request message is the PDU session establishment request message or a communication channel establishment request, there is a many-to-one mapping relationship between an AI session identifier and a PDU session identifier; and
in a case that the type of the communication resource request message is the PDU session modification request message or a communication channel modification request, there is a one-to-one mapping relationship between an AI session identifier and a PDU session identifier.

In some embodiments, the AI resource establishment request message includes at least one of the following: an AI policy, information of the second network element, an address of the fourth network element, and an information feedback indication of the first network element.

In some embodiments, the first processing module 22 is specifically configured to select the fifth network element based on at least one of the following:
an area of interest;
terminal AI service subscription information;
a DNN;
S-NSSAI;
an AI service identifier;
a supported AI service; and
a capability of the fifth network element.

In some embodiments, the communication resource request message received by the second receiving module 23 includes at least one of the following:
obtaining from a terminal;
obtaining from a sixth network element; and
obtaining from a fifth network element.

In some embodiments, the second receiving module 23 is further configured to obtain a communication policy, an AI policy, an address of an application server AS, and/or the information of the first network element, for determining the second network element, where the obtaining methods include at least one of the following:
determining based on the communication resource request message;
obtaining from a fifth network element;
obtaining from a sixth network element; and
obtaining from a seventh network element.

In some embodiments, in a case that the communication policy and the AI policy are obtained from the seventh network element,
in a case that a dynamic policy control and charging PCC architecture is deployed, the second sending module 21 sends a policy request message to the seventh network element, requesting the seventh network element to allocate a policy, and receives the communication policy and the AI policy returned by the seventh network element, where the policy request message includes at least one of the following: a terminal identifier, a PDU session identifier, an associated AI session identifier, a DNN, S-NSSAI, and AI service requirement description information; and
in a case that the dynamic PCC architecture is not deployed, the first processing module 22 determines the communication policy and the AI policy based on at least one of the following: local configuration, an AI service identifier, and a policy reference identifier.

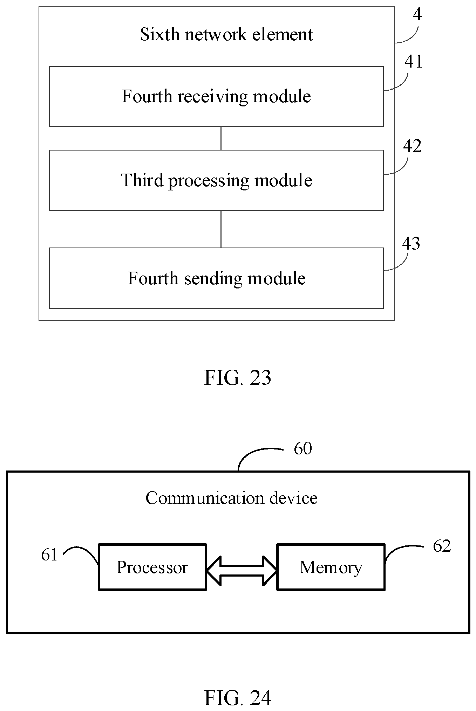

Referring to FIG. 22, FIG. 22 is a schematic structural diagram of an AI service connection establishment apparatus according to an embodiment of this application. The apparatus is applied to a fifth network element 3, and as shown in FIG. 23, the AI service connection establishment apparatus includes:
a third receiving module 33, configured to receive an AI resource establishment request message, where the AI resource establishment request message is used to request a network side to allocate an AI resource for an AI service; and
a second processing module 32, configured to allocate an AI resource based on the AI resource establishment request message; and
a third receiving module 31, configured to return an AI resource establishment response message, where the AI resource establishment response message includes at least one of the following: information of a first network element, and information of a second network element.

In this embodiment of this application, the network side can allocate a communication resource and an AI resource for the AI service, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

In some embodiments, the AI resource establishment request message includes at least one of the following:
AI service requirement description information;
a data network name DNN;
single network slice selection assistance information S-NSSAI;
a session type indication, used to indicate whether a session is a PDU session or an AI session;
PDU session information;
a policy reference identifier; and
an address of an application server AS.

In some embodiments, the second processing module 32 is configured to determine an AI policy and/or a communication policy based on the AI service requirement description information.

In some embodiments, the third receiving module 33 is further configured to obtain an AI policy and/or a communication policy, where the obtaining methods include at least one of the following:
obtaining based on local configuration;
obtaining from a seventh network element;
obtaining from a fourth network element; and
obtaining from a sixth network element.

In some embodiments, the third sending module 31 is further configured to send a communication resource request message to the fourth network element, for requesting the fourth network element to select a second network element, where the communication resource request message includes at least one of the following: a communication policy, information of the first network element, an address of the fifth network element, and an information feedback indication of the first network element.

In some embodiments, the third sending module 31 is further configured to send an AI resource request message to an eighth network element, used for the eighth network element to select the first network element based on the AI resource request message, where the AI resource request message includes at least one of the following: model information, data source information, an AI service computation load, an address of an application server AS, and an AI policy; and

The third receiving module 33 is further configured to receive an AI resource request response message returned by the eighth network element, where the AI resource request response message includes information of the first network element, and the information of the first network element includes at least one of the following:
an Internet protocol IP address;
identification information; and
a fully qualified domain name FQDN.

In some embodiments, the third sending module 31 is further configured to: in a case that a first condition is satisfied, send a model request message to a ninth network element, where the model request message is used to request model information.

The third receiving module 33 is further configured to receive a model request response message sent by the ninth network element, where the model request response message is used to indicate model information.

The model information includes at least one of the following: a model identifier, a model download address, a model size, a model training algorithm, model precision, accuracy, a model manufacturer, a model function identifier, a model architecture, and a weight parameter; and the first condition includes at least one of the following:
the AI resource establishment request message does not include model information;
the AI resource establishment request message includes a first indication, indicating that interaction with the ninth network element is required; and
the fifth network element is unable to obtain model information.

In some embodiments, the second processing module 32 is configured to select the ninth network element based on at least one of the following:
a DNN;
S-NSSAI;
an AI service identifier;
a supported AI service;
service area information; and
supported model information.

In some embodiments, the third sending module 31 is further configured to: in a case that a second condition is satisfied, send a data source request message to a tenth network element, where the data source request message is used to request data source information.

The third receiving module 33 is further configured to receive a data source response message sent by the tenth network element, where the data source response message is used to indicate data source information.

The data source information includes at least one of the following: a data source IP address, a data source FQDN, and a data source identifier; and
the second condition includes at least one of the following:
the AI resource establishment request message does not include data source information;
the AI resource establishment request message includes a second indication, indicating that interaction with the tenth network element is required; and
the fifth network element is unable to obtain data source information.

In some embodiments, the second processing module 32 is configured to select the tenth network element based on at least one of the following:
a DNN;
S-NSSAI;
an AI service identifier;
a supported AI service;
service area information; and
data source information.

In some embodiments, the communication resource request message includes at least one of the following:
a protocol data unit PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

In some embodiments, in a case that the type of the communication resource request message is a PDU session establishment request message or a communication channel establishment request, there is a many-to-one mapping relationship between an AI session identifier and a PDU session identifier; and
in a case that the type of the communication resource request message is a PDU session modification request message or a communication channel modification request, there is a one-to-one mapping relationship between an AI session identifier and a PDU session identifier.

In some embodiments, the receiving the AI resource establishment request message includes at least one of the following:
obtaining from a fourth network element, where the AI resource establishment request message is generated by a terminal or the fourth network element; and
obtaining from a sixth network element, where the AI resource establishment request message is generated by the terminal.

In some embodiments, the third sending module 31 is further configured to send an AI resource establishment request response to the sixth network element, used to feed back an AI resource establishment result, where the AI resource establishment request response includes at least one of the following: information of the first network element, and an AI policy.

In some embodiments, the AI service requirement description information includes at least one of the following information:
an AI service identifier;
an AI service quality of experience QoE requirement;
AI service quality of service QoS information;
a model parameter; and
first information, indicating whether network internal data and/or a data source is required. Optionally, the first information is used to indicate whether internal network data needs to be obtained from the data source.

In some embodiments, the information of the first network element includes at least one of the following: an IP address of the first network element, identification information of the first network element, and an FQDN of the first network element; and
the information of the second network element includes at least one of the following: an IP address of the second network element, identification information of the second network element, and an FQDN of the second network element.

Referring to FIG. 23, FIG. 23 is a schematic structural diagram of an AI service connection establishment apparatus according to an embodiment of this application. The apparatus is applied to a sixth network element 4, and as shown in FIG. 23, the AI service connection establishment apparatus includes:
a fourth receiving module 41, configured to receive a first request message, where the first request message is used to request a network side to allocate a network resource for an AI service of a terminal;
a third processing module 42, configured to select a fifth network element and a fourth network element; and
a fourth sending module 43, configured to send an AI resource establishment request message to the fifth network element and a communication resource request message to the fourth network element.

The fourth receiving module 41 is further configured to receive an AI resource establishment response message returned by the fifth network element, where the AI resource establishment response message includes information of a first network element allocated for the AI service; and receive a communication resource establishment response message returned by the fourth network element, where the communication resource establishment response message includes information of a second network element allocated for the AI service.

The fourth sending module 43 is further configured to return a first request response message, where the first request response message includes the information of the first network element and the information of the second network element.

In this embodiment of this application, the network side can allocate a communication resource and an AI resource for the AI service, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

In some embodiments, the third processing module 42 is configured to: based on at least one of the following, determine to first send the communication resource request message or the AI resource establishment request message:
local configuration; and
a resource determination indication, used to indicate to first determine an AI resource or a communication resource.

In some embodiments, the first request message includes at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier; and
an address of an application server AS.

In some embodiments, the AI service requirement description information includes at least one of the following: an AI service identifier; an AI service type; an AI service quality of experience QoE requirement; an AI service quality of service QoS information, a model parameter; and first information, indicating whether network internal data and/or a data source is required. Optionally, the first information is used to indicate whether internal network data needs to be obtained from the data source.

In some embodiments, the communication resource request message includes at least one of the following:
a protocol data unit PDU session establishment request message, used to establish a PDU session, where the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

The AI resource request message includes at least one of the following:
an AI resource establishment request message, used to establish an AI session, where the AI session is a data transmission tunnel between the first network element and the terminal; and
an AI session establishment request message.

In some embodiments, the third processing module 42 selects the fifth network element based on at least one of the following:
an area of interest;
terminal AI service subscription information;
a DNN;
S-NSSAI;
an AI service identifier;
a supported AI service; and
a capability of the fifth network element.

In some embodiments, the fourth network element satisfies at least one of the following:
the fourth network element supports forwarding an AI resource request message;
the fourth network element supports establishing a bearer for an AI service;
the fourth network element supports communication with an AI network function; and
the fourth network element supports selecting an AI network function.

The AI service connection establishment apparatus provided in this embodiment of this application can implement the processes implemented in the method embodiment in FIG. 4 to FIG. 19, with the same technical effects achieved. To avoid repetition, details are not described herein again.

As shown in FIG. 24, an embodiment of this application further provides a communication device 60, including a processor 61 and a memory 62. A program or instructions capable of running on the processor 61 are stored in the memory 62. For example, when the communication device 60 is a terminal and when the program or the instructions are executed by the processor 61, the steps of the foregoing embodiments of the AI service connection establishment method are implemented, with the same technical effects achieved When the communication device 60 is a network side and when the program or the instructions are executed by the processor 61, the steps of the foregoing embodiments of the AI service connection establishment method are implemented, with the same technical effects achieved. To avoid repetition, details are not described herein again.

An embodiment of this application further provides a terminal, which includes a processor and a communication interface, where the communication interface is coupled to the processor, and the processor is configured to run a program or instructions to implement the steps of the method embodiments shown in FIG. 4, and FIG. 8 to FIG. 19. The terminal embodiment corresponds to the foregoing terminal side method embodiment, and the implementation processes and implementations of the foregoing method embodiments can be applied to the terminal embodiments, with the same technical effects achieved.

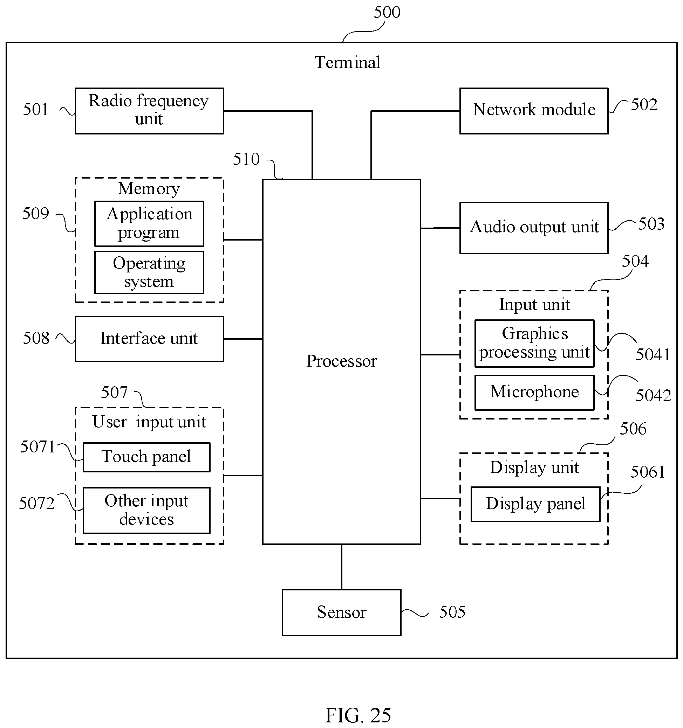

Specifically, FIG. 25 is a schematic diagram of a hardware structure of a terminal implementing an embodiment of this application.

The terminal 500 includes but is not limited to at least part of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 25 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061. The display panel 5061 may be configured in a form of a liquid crystal display, an organic light-emitting diode display, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but be not limited to a physical keyboard, a function key (such as a volume control key or an on/off key), a trackball, a mouse, and a joystick. Details are not described herein.

In this embodiment of this application, after receiving downlink data from a network side, the radio frequency unit 501 sends the downlink data to the processor 510 for processing; and the radio frequency unit 501 also sends uplink data to the network side. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may mainly include a first storage area for storing programs or instructions and a second storage area for storing data, where the first storage area may store an operating system, an application program or instructions required by at least one function (for example, an audio playing function and an image playing function), and the like. Further, the memory 509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 509 described in the embodiments of this application is intended to include but is not limited to these and any other suitable types of memories.

The processor 510 may include one or more processing units. Optionally, the processor 510 may integrate an application processor and a modem processor. The application processor primarily processes operations involving an operating system, user interface, application program, or the like. The modem processor primarily processes radio communication signals, for example, being a baseband processor. It should be understood that alternatively, the modem processor may not be integrated into the processor 510.

The radio frequency unit 501 is configured to send a first request message to a network side, where the first request message is used to request the network side to allocate a network resource for an AI service; and receive a first request response message returned by the network side, where the first request response message includes at least one of the following: information of a first network element allocated by the network side for the AI service, information of a second network element allocated by the network side for the AI service, and model information.

In this embodiment of this application, the terminal requests the network side to allocate a network resource for the AI service, and the network side can allocate a communication resource and an AI resource for the AI service according to the request from the terminal, resolving the problem that a wireless mobile communication system cannot provide AI services to terminals. In this way, an operator network can not only provide basic communication guarantees but also provide AI service processing functions, which not only expands operator service scenarios but also ensures security of terminal data circulation.

It can be understood that for the implementation processes of the implementations mentioned in this embodiment, reference may be made to the related descriptions of the method embodiments, with the same or corresponding technical effects achieved. To avoid repetition, details are not described herein again.

An embodiment of this application further provides a network-side device, which includes a processor and a communication interface, where the communication interface is coupled to the processor, and the processor is configured to run a program or instructions to implement the steps of the method embodiments shown in FIG. 5 to FIG. 7. The network side embodiment corresponds to the foregoing network side method embodiment, and the implementation processes and implementations of the foregoing method embodiments can be applied to the network side embodiment, with the same technical effects achieved.

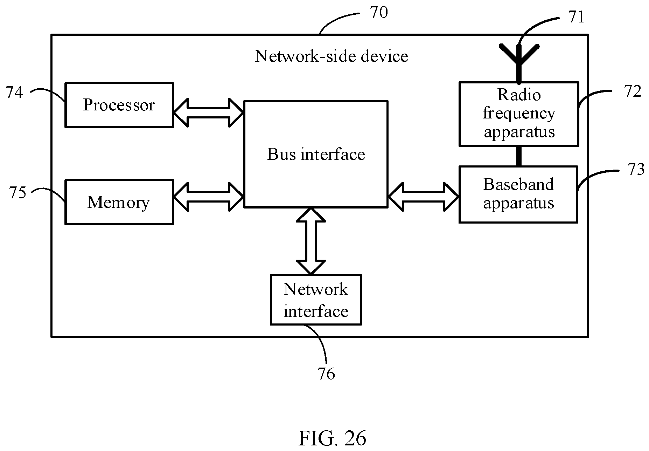

Specifically, an embodiment of this application further provides a network-side device. As shown in FIG. 26, the network-side device 70 includes an antenna 71, a radio frequency apparatus 72, a baseband apparatus 73, a processor 74, and memory 75. The antenna 71 is connected to the radio frequency apparatus 72. In an uplink direction, the radio frequency apparatus 72 receives information by using the antenna 71, and transmits the received information to the baseband apparatus 73 for processing. In a downlink direction, the baseband apparatus 73 processes to-be-transmitted information, and transmits the information to the radio frequency apparatus 72; and the radio frequency apparatus 72 processes the received information and then transmits the information by using the antenna 71.

The method executed by the network side in the foregoing embodiments may be implemented on the baseband apparatus 73. The baseband apparatus 73 includes a baseband processor.

The baseband apparatus 73 may include, for example, at least one baseband board, where a plurality of chips are disposed on the baseband board. As shown in FIG. 26, one of the chips is, for example, the baseband processor, and connected to the memory 75 through a bus interface, to invoke the program in the memory 75 to perform the operations of the network device shown in the foregoing method embodiment.

The network side may further include a network interface 76, where the interface is, for example, a common public radio interface (Common Public Radio Interface, CPRI).

Specifically, the network-side device 70 in this embodiment of this application further includes: instructions or a program stored in the memory 75 and capable of running on the processor 74. The processor 74 invokes the instructions or program in the memory 75 to execute the method executed by the modules shown in FIG. 21 to FIG. 23, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the AI service connection establishment method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing embodiments of the AI service connection establishment method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the AI service connection establishment method, with the same technical effects achieved. To avoid repetition, details are not repeated herein.

An embodiment of this application further provides a wireless communication system, including a terminal and a network-side device, where the terminal can be configured to execute the steps of the AI service connection establishment method described above, and the network-side device can be configured to execute the steps of the AI service connection establishment method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network side to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. An AI service connection establishment method, comprising:
sending, by a terminal, a first request message to a network side, wherein the first request message is used to request the network side to allocate a network resource for an AI service; and
receiving, by the terminal, a first request response message returned by the network side, wherein the first request response message comprises at least one of the following: information of a first network element allocated by the network side for the AI service, information of a second network element allocated by the network side for the AI service, and model information.

2. The AI service connection establishment method according to claim 1, wherein the first request message comprises at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier; and
an address of an application server AS.

3. The AI service connection establishment method according to claim 2, wherein the AI service requirement description information comprises at least one of the following:
an AI service identifier;
an AI service type;
an AI service quality of experience QoE requirement;
AI service quality of service QoS information;
model parameter (s); and
first information, indicating whether network internal data and a data source are required.

4. The AI service connection establishment method according to claim 1, wherein a type of the first request message comprises at least one of the following:
a communication resource request message, used to request the network side to allocate a communication resource for an AI service;
an AI resource request message, used to request the network side to allocate an AI resource for an AI service; and
a non-access stratum NAS message, used to request the network side to allocate a network resource for an AI service.

5. The AI service connection establishment method according to claim 4, wherein the communication resource request message comprises at least one of the following:
a protocol data unit PDU session establishment request message, used to establish a PDU session, wherein the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer;
the AI resource request message comprises at least one of the following:
an AI resource establishment request message, used to establish an AI session, wherein the AI session is a data transmission tunnel between the first network element and the terminal; and
an AI session establishment request message; and
the NAS message comprises at least one of the following:
a registration message;
a service request message;
an uplink NAS transport message; and
a first control message, used to establish or modify a control signaling connection.

6. The AI service connection establishment method according to claim 1, wherein after the receiving, by the terminal, a first request response message returned by the network side, the method further comprises:
sending, by the terminal, AI service data to the first network element, wherein the AI service data is transported via an AI session and routed to the first network element via the second network element; and
receiving, by the terminal, an AI service data processing result returned by the first network element.

7. The AI service connection establishment method according to claim 6, wherein the AI service data processing result is obtained by the first network element based on at least one of a model, terminal data, and internal network data, and the internal network data is obtained by the first network element from a third network element.

8. An AI service connection establishment method, comprising:
receiving, by a fourth network element, a communication resource request message, wherein the communication resource request message is used to request a network side to allocate a communication resource for an AI service; and
allocating, by the fourth network element, a communication resource based on the communication resource request message, and returning a communication resource establishment response message, wherein the communication resource establishment response message comprises at least one of the following: information of a first network element allocated by the network side for the AI service, information of a second network element allocated by the network side for the AI service, and model information.

9. The AI service connection establishment method according to claim 8, wherein the fourth network element satisfies at least one of the following:
the fourth network element supports forwarding an AI resource request message;
the fourth network element supports establishing a bearer for an AI service;
the fourth network element supports communication with an AI network function;
and
the fourth network element supports selecting an AI network function.

10. The AI service connection establishment method according to claim 8, wherein the communication resource request message comprises at least one of the following:
a terminal identifier;
a protocol data unit PDU session identifier;
an associated AI session identifier;
a data network name DNN;
single network slice selection assistance information S-NSSAI;
a session type indication, used to indicate whether a session is a PDU session or an AI session;
PDU session information, used to indicate attribute (s) of a PDU session;
AI service requirement description information;
an address of a fifth network element; and
an address of an application server AS.

11. The AI service connection establishment method according to claim 10, wherein a type of the communication resource request message comprises at least one of the following:
a PDU session establishment request message, used to establish a PDU session, wherein the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer.

12. The AI service connection establishment method according to claim 8, wherein before the allocating, by the fourth network element, a communication resource based on the communication resource request message, the method further comprises:
selecting, by the fourth network element, a fifth network element and sending an AI resource establishment request message to the fifth network element, wherein the AI resource establishment request message is used to request the network side to allocate an AI resource for an AI service, and the AI resource establishment request message is generated by a terminal or the fourth network element; and
receiving, by the fourth network element, an AI resource establishment response message returned by the fifth network element, wherein the AI resource establishment response message comprises the information of the first network element allocated for the AI service.

13. The AI service connection establishment method according to claim 11,
wherein
in a case that the type of the communication resource request message is the PDU session establishment request message or a communication channel establishment request, there is a many-to-one mapping relationship between an AI session identifier and a PDU session identifier; and
in a case that the type of the communication resource request message is the PDU session modification request message or a communication channel modification request, there is a one-to-one mapping relationship between an AI session identifier and a PDU session identifier.

14. The AI service connection establishment method according to claim 12, wherein the AI resource establishment request message comprises at least one of the following: an AI policy, information of the second network element, an address of the fourth network element, and an information feedback indication of the first network element.

15. The AI service connection establishment method according to claim 12, wherein the fourth network element selects the fifth network element based on at least one of the following:
an area of interest;
terminal AI service subscription information;
a DNN;
S-NSSAI;
an AI service identifier;
a supported AI service; and
a capability of the fifth network element.

16. The AI service connection establishment method according to claim 8, wherein the receiving, by a fourth network element, a communication resource request message comprises at least one of the following:
obtaining from a terminal;
obtaining from a sixth network element; and
obtaining from a fifth network element.

17. The AI service connection establishment method according to claim 8, wherein the method further comprises:
obtaining, by the fourth network element, a communication policy, an AI policy, an address of an application server AS, and/or the information of the first network element, for determining the second network element, wherein the obtaining manner comprises at least one of the following:
determining based on the communication resource request message;
obtaining from a fifth network element;
obtaining from a sixth network element; and
obtaining from a seventh network element.

18. The AI service connection establishment method according to claim 17, wherein in a case that the communication policy and the AI policy are obtained from the seventh network element, the obtaining, by the fourth network element, a communication policy and an AI policy comprises:
in a case that a dynamic policy control and charging PCC architecture is deployed, sending, by the fourth network element, a policy request message to the seventh network element, requesting the seventh network element to allocate a policy, and receiving the communication policy and the AI policy returned by the seventh network element, wherein the policy request message comprises at least one of the following: a terminal identifier, a PDU session identifier, an associated AI session identifier, a DNN, S-NSSAI, and AI service requirement description information; and
in a case that the dynamic PCC architecture is not deployed, determining, by the fourth network element, the communication policy and the AI policy based on at least one of the following: local configuration, an AI service identifier, and a policy reference identifier.

19. An AI service connection establishment method, comprising:
receiving, by a fifth network element, an AI resource establishment request message, wherein the AI resource establishment request message is used to request a network side to allocate an AI resource for an AI service; and
allocating, by the fifth network element, an AI resource based on the AI resource establishment request message, and returning an AI resource establishment response message, wherein the AI resource establishment response message comprises at least one of the following: information of a first network element, and information of a second network element.

20. The AI service connection establishment method according to claim 19, wherein the AI resource establishment request message comprises at least one of the following:
AI service requirement description information;
a data network name DNN;
single network slice selection assistance information S-NSSAI;
a session type indication, used to indicate whether a session is a PDU session or an AI session;
PDU session information;
a policy reference identifier; and
an address of an application server AS.

21. The AI service connection establishment method according to claim 20, wherein before the allocating, by the fifth network element, an AI resource based on the AI resource establishment request message, the method further comprises:
determining, by the fifth network element, an AI policy and/or a communication policy based on the AI service requirement description information.

22. The AI service connection establishment method according to claim 21, wherein the method further comprises:
obtaining, by the fifth network element, an AI policy and/or a communication policy, wherein the obtaining methods comprise at least one of the following:
obtaining based on local configuration;
obtaining from a seventh network element;
obtaining from a fourth network element; and
obtaining from a sixth network element.

23. The AI service connection establishment method according to claim 22, wherein in a case of obtaining from the fourth network element, the method further comprises:
sending, by the fifth network element, a communication resource request message to the fourth network element, for requesting the fourth network element to select a second network element, wherein the communication resource request message comprises at least one of the following: a communication policy, information of the first network element, an address of the fifth network element, and an information feedback indication of the first network element.

24. The AI service connection establishment method according to claim 19, wherein the allocating, by the fifth network element, an AI resource based on the AI resource establishment request message comprises:
sending, by the fifth network element, an AI resource request message to an eighth network element, used for the eighth network element to select the first network element based on the AI resource request message, wherein the AI resource request message comprises at least one of the following: model information, data source information, an AI service computation load, an address of an application server AS, and an AI policy; and
receiving, by the fifth network element, an AI resource request response message returned by the eighth network element, wherein the AI resource request response message comprises information of the first network element, and the information of the first network element comprises at least one of the following:
an Internet protocol IP address;
identification information; and
a fully qualified domain name FQDN.

25. The AI service connection establishment method according to claim 24, wherein before the allocating, by the fifth network element, an AI resource based on the AI resource establishment request message, the method further comprises:
in a case that a first condition is satisfied, sending, by the fifth network element, a model request message to a ninth network element, wherein the model request message is used to request model information; and
receiving, by the fifth network element, a model request response message sent by the ninth network element, wherein the model request response message is used to indicate model information; wherein
the model information comprises at least one of the following: a model identifier, a model download address, a model size, a model training algorithm, model precision, accuracy, a model manufacturer, a model function identifier, a model architecture, and a weight parameter; and the first condition comprises at least one of the following:
the AI resource establishment request message does not comprise model information;
the AI resource establishment request message comprises a first indication, indicating that interaction with the ninth network element is required; and
the fifth network element is unable to obtain model information.

26. The AI service connection establishment method according to claim 25, wherein the fifth network element selects the ninth network element based on at least one of the following:
a DNN;
S-NSSAI;
an AI service identifier;
a supported AI service;
service area information; and
supported model information.

27. The AI service connection establishment method according to claim 24, wherein before the allocating, by the fifth network element, an AI resource based on the AI resource establishment request message, the method further comprises:
in a case that a second condition is satisfied, sending, by the fifth network element, a data source request message to a tenth network element, wherein the data source request message is used to request data source information; and
receiving, by the fifth network element, a data source response message sent by the tenth network element, wherein the data source response message is used to indicate data source information; wherein
the data source information comprises at least one of the following: a data source IP address, a data source FQDN, and a data source identifier; and
the second condition comprises at least one of the following:
the AI resource establishment request message does not comprise data source information;
the AI resource establishment request message comprises a second indication, indicating that interaction with the tenth network element is required; and
the fifth network element is unable to obtain data source information.

28. The AI service connection establishment method according to claim 27, wherein the fifth network element selects the tenth network element based on at least one of the following:
a DNN;
S-NSSAI;
an AI service identifier;
a supported AI service;
service area information; and
data source information.

29. The AI service connection establishment method according to claim 23, wherein the communication resource request message comprises at least one of the following:
a protocol data unit PDU session establishment request message, used to establish a PDU session, wherein the PDU session is a data transmission tunnel between a communication resource node and a terminal;
a PDU session modification request message, used to modify a PDU session;
a communication channel establishment request message, used to establish a communication bearer; and
a communication channel modification request message, used to modify a communication bearer.

30. The AI service connection establishment method according to claim 29,
wherein
in a case that the type of the communication resource request message is a PDU session establishment request message or a communication channel establishment request, there is a many-to-one mapping relationship between an AI session identifier and a PDU session identifier; and
in a case that the type of the communication resource request message is a PDU session modification request message or a communication channel modification request, there is a one-to-one mapping relationship between an AI session identifier and a PDU session identifier.

31. The AI service connection establishment method according to claim 19, wherein the receiving, by a fifth network element, an AI resource establishment request message comprises at least one of the following:
obtaining from a fourth network element, wherein the AI resource establishment request message is generated by a terminal or the fourth network element; and
obtaining from a sixth network element, wherein the AI resource establishment request message is generated by the terminal.

32. The AI service connection establishment method according to claim 31, wherein in a case of obtaining from the sixth network element, the method further comprises:
sending, by the fifth network element, an AI resource establishment request response to the sixth network element, used to feed back an AI resource establishment result, wherein the AI resource establishment request response comprises at least one of the following: information of the first network element, and an AI policy.

33. The AI service connection establishment method according to claim 20, wherein the AI service requirement description information comprises at least one of the following information:
an AI service identifier;
an AI service quality of experience QoE requirement;
AI service quality of service QoS information;
a model parameter; and
first information, indicating whether network internal data and a data source are required.

34. The AI service connection establishment method according to claim 19, wherein the information of the first network element comprises at least one of the following: an IP address of the first network element, identification information of the first network element, and an FQDN of the first network element; and
the information of the second network element comprises at least one of the following: an IP address of the second network element, identification information of the second network element, and an FQDN of the second network element.

35. An AI service connection establishment method, comprising:
receiving, by a sixth network element, a first request message, wherein the first request message is used to request a network side to allocate a network resource for an AI service of a terminal;
selecting, by the sixth network element, a fifth network element and a fourth network element, sending an AI resource establishment request message to the fifth network element, and sending a communication resource request message to the fourth network element;
receiving, by the sixth network element, an AI resource establishment response message returned by the fifth network element, wherein the AI resource establishment response message comprises information of a first network element allocated for the AI service; and receiving a communication resource establishment response message returned by the fourth network element, wherein the communication resource establishment response message comprises information of a second network element allocated for the AI service; and
returning, by the sixth network element, a first request response message, wherein the first request response message comprises the information of the first network element and the information of the second network element.

36. The AI service connection establishment method according to claim 35, wherein the method further comprises:
determining, by the sixth network element based on at least one of the following, to first send the communication resource request message or the AI resource establishment request message:
local configuration; and
a resource determination indication, used to indicate to first determine an AI resource or a communication resource.

37. The AI service connection establishment method according to claim 35, wherein the first request message comprises at least one of the following:
AI service requirement description information;
a data network name DNN;
single network slice selection assistance information S-NSSAI;
a session type indication, used to indicate whether a session is a protocol data unit PDU session or an AI session;
PDU session information;
a policy reference identifier; and
an address of an application server AS.

38. The AI service connection establishment method according to claim 37, wherein the AI service requirement description information comprises at least one of the following:
an AI service identifier;
an AI service type;
an AI service quality of experience QoE requirement;
AI service quality of service QoS information;
a model parameter; and
first information, indicating whether network internal data and a data source are required.

39. The AI service connection establishment method according to claim 35, wherein the communication resource request message comprises at least one of the following:
a protocol data unit PDU session establishment request message, used to establish a PDU session, wherein the PDU session is a data transmission tunnel between a communication resource node and the terminal;
a PDU session modification request message, used to modify a PDU session;
a communication channel establishment request message, used to establish a communication bearer; and
a communication channel modification request message, used to modify a communication bearer;
the AI resource request message comprises at least one of the following:
an AI resource establishment request message, used to establish an AI session, wherein the AI session is a data transmission tunnel between the first network element and the terminal; and
an AI session establishment request message.

40. The AI service connection establishment method according to claim 35, wherein the sixth network element selects the fifth network element based on at least one of the following:
an area of interest;
terminal AI service subscription information;
a DNN;
S-NSSAI;
an AI service identifier;
a supported AI service; and
a capability of the fifth network element.

41. The AI service connection establishment method according to claim 35, wherein the fourth network element satisfies at least one of the following:
the fourth network element supports forwarding an AI resource request message;
the fourth network element supports establishing a bearer for an AI service;
the fourth network element supports communication with an AI network function;
and
the fourth network element supports selecting an AI network function.

42. An AI service connection establishment apparatus, comprising:
a first sending module, configured to send a first request message to a network side, wherein the first request message is used to request the network side to allocate a network resource for an AI service; and
a first receiving module, configured to receive a first request response message returned by the network side, wherein the first request response message comprises at least one of the following: information of a first network element allocated by the network side for the AI service, information of a second network element allocated by the network side for the AI service, and model information.

43. An AI service connection establishment apparatus, comprising:
a second receiving module, configured to receive a communication resource request message, wherein the communication resource request message is used to request a network side to allocate a communication resource for an AI service;
a first processing module, configured to allocate a communication resource based on the communication resource request message; and
a second sending module, configured to return a communication resource establishment response message, wherein the communication resource establishment response message comprises at least one of the following: information of a first network element allocated by the network side for the AI service, information of a second network element allocated by the network side for the AI service, and model information.

44. An AI service connection establishment apparatus, comprising:
a third receiving module, configured to receive an AI resource establishment request message, wherein the AI resource establishment request message is used to request a network side to allocate an AI resource for an AI service;
a second processing module, configured to allocate an AI resource based on the AI resource establishment request message; and
a third sending module, configured to return an AI resource establishment response message, wherein the AI resource establishment response message comprises at least one of the following: information of a first network element, and information of a second network element.

45. An AI service connection establishment apparatus, comprising:
a fourth receiving module, configured to receive a first request message, wherein the first request message is used to request a network side to allocate a network resource for an AI service of a terminal;
a third processing module, configured to select a fifth network element and a fourth network element; and
a fourth sending module, configured to send an AI resource establishment request message to the fifth network element and a communication resource request message to the fourth network element; wherein
the fourth receiving module is further configured to receive an AI resource establishment response message returned by the fifth network element, wherein the AI resource establishment response message comprises information of a first network element allocated for the AI service; and receive a communication resource establishment response message returned by the fourth network element, wherein the communication resource establishment response message comprises information of a second network element allocated for the AI service; and
the fourth sending module is further configured to return a first request response message, wherein the first request response message comprises the information of the first network element and the information of the second network element.

46. A terminal, comprising a processor and a memory, wherein the memory stores a program or instructions capable of running on the processor, and when the program or instructions are executed by the processor, the steps of the AI service connection establishment method according to any one of claims 1 to 7 are implemented.

47. A network-side device, comprising a processor and a memory, wherein the memory stores a program or instructions capable of running on the processor, and when the program or instructions are executed by the processor, the steps of the AI service connection establishment method according to any one of claims 8 to 41 are implemented.

48. A readable storage medium, wherein the readable storage medium stores a program or instructions, and when the program or instructions are executed by a processor, the steps of the AI service connection establishment method according to any one of claims 1 to 7 or the steps of the AI service connection establishment method according to according to any one of claims 8 to 41 are implemented.
